# EUROPEAN PATENT APPLICATION

(11) **EP 4 791 100 A1**
(43) Date of publication of application: **12.08.2026**
(21) Application number: 25156294.8
(22) Date of filing: 06.02.2025
(51) Int. Cl.: H04W 72/23, H04W 74/00, H04W 74/0833

(54) **COMMUNICATION APPARATUS AND BASE STATION INVOLVED IN A COMMON CHANNEL ADAPTION PROCEDURE**

(71) Applicant: Panasonic Intellectual Property Corporation of America, Torrance, CA 90504 (US)
(72) Inventor: LI, Hongchao, 63225 Langen (DE); KURUVATTI, Nandish, 63225 Langen (DE); SUZUKI, Hidetoshi, Osaka, 571-8501 (JP); HORIUCHI, Ayako, Osaka, 571-8501 (JP)
(74) Representative: Grünecker Patent- und Rechtsanwälte PartG mbB

(57) **Abstract**

The present disclosure relates to a communication apparatus comprising the following. A transceiver of the communication apparatus, in operation, receives a first indication indicating an availability of additional resource occasions for a common channel. A processing circuitry of the communication apparatus, in operation, obtains a set of candidate resource occasions for the common channel from a configuration of the additional resource occasions, determines a start timing for applying the additional resource occasions among the set of candidate resource occasions, based on a reception timing of the first indication, and starts to apply the additional resource occasions from the determined start timing.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved common channel adaption procedures. In an embodiment, the techniques disclosed here feature: A communication apparatus, comprising a transceiver, which, in operation, receives a first indication indicating an availability of additional resource occasions for a common channel, and, circuitry, which, in operation, obtains a set of candidate resource occasions for the common channel from a configuration of the additional resource occasions, determines a start timing for applying the additional resource occasions among the set of candidate resource occasions, based on a reception timing of the first indication, and starts to apply the additional resource occasions from the determined start timing. In another embodiment, the techniques disclosed here feature: a base station, comprising circuitry which, in operation, determines additional resource occasions for a common channel among a set of candidate resource occasions, with which a communication apparatus is configured, generates a first indication, indicating to the communication apparatus an availability of the additional resource occasions, and determines a transmission timing of the first indication, the transmission timing being usable by the communication apparatus to determine a start timing for applying the additional resource occasions, and a transceiver which, in operation, transmits the first indication to the communication apparatus at the transmission timing.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system;
- **Fig. 2**: illustrates configuration of legacy and additional PRACH resources;
- **Fig. 3**: illustrates distribution of legacy and additional PRACH resources in time domain.
- **Fig. 4**: illustrates an example of condensed PRACH resource occasions in time domain;
- **Fig. 5**: illustrates exemplary disadvantages of a common channel adaption procedure;
- **Fig. 6**: is a block diagram showing an exemplary communication system comprising a communication apparatus, such as a user equipment (UE), and a base station;
- **Fig. 7**: illustrates a structure of the communication device, such as the UE, according to an exemplary implementation of the improved common channel adaption procedure;
- **Fig. 8**: illustrates a structure of the communication device, such as the base station, according to an exemplary implementation of the improved common channel adaption procedure;
- **Fig. 9**: illustrates a flow diagram for the UE behavior according to an exemplary implementation of the improved common channel adaption procedure;
- **Fig. 10**: illustrates a flow diagram for the base station behavior according to an exemplary implementation of the improved common channel adaption procedure;
- **Fig. 11**: is a signaling diagram illustrating an exemplary exchange between the UE and the gNB according to a First Solution of the improved common channel adaption procedure;
- **Fig. 12**: is a flow chart illustrating steps of a common channel adaption operation performed by a UE;
- **Fig. 13**: illustrates a first exemplary implementation of the First Solution of the improved common channel adaption procedure;
- **Fig. 14**: illustrates an example of a modification of the first exemplary implementation of the First Solution of the improved common channel adaption procedure;
- **Fig. 15**: illustrates a first variation of a second exemplary implementation of the First Solution of the improved common channel adaption procedure;
- **Fig. 16**: illustrates a second variation of a second exemplary implementation of the First Solution of the improved common channel adaption procedure;
- **Fig. 17**: illustrates a third variation of a second exemplary implementation of the First Solution of the improved common channel adaption procedure;
- **Fig. 18**: illustrates a fourth variation of a second exemplary implementation of the First Solution of the improved common channel adaption procedure;
- **Fig. 19**: is a signaling diagram illustrating an exemplary exchange between the UE and the gNB according to a Second Solution of the improved common channel adaption procedure;
- **Fig. 20**: is a signaling diagram illustrating an exemplary exchange between the UE and the gNB according to a Third Solution of the improved common channel adaption procedure;
- **Fig. 21**: shows exemplary functional split options in 5G open-radio access network (O-RAN).

### DETAILED DESCRIPTION

### 5G NR system architecture and protocol stacks

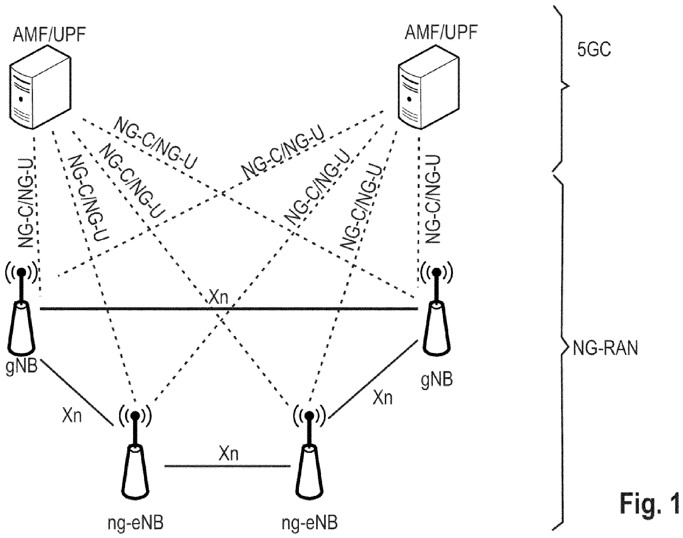

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

### Network energy saving (NES)

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-linter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block 1) for UEs in idle/inactive mode. This includes triggering method by uplink wake-up-signal using PRACH (physical random access channel), wake-up-signal configuration provisioning to UE, and information exchange between gNBs at least for the configuration of wake-up signal, if necessary. For example, it is discussed that the UE may obtain an uplink wake-up signal (WUS) configuration from a network cell that is periodically transmitting at least its own SSB to the UE. The UE may transmit the UL WUS on the NES Cell and in response receive an on-demand SIB1 from the NES Cell. This implementation scenario may include a UE implemented triggering method by an UE uplink wake-up-signal using PRACH.

Thirdly, adaptation of common signal/channel transmissions is to be specified, including adaptation of SSB in time domain, e.g. adapting periodicity, and adaptation of PRACH (physical random access channel) in time domain (a further issue for study and possible specification is adaptation of PRACH in spatial domain, e.g. non-uniform PRACH resources per SSB), and adaptation of paging occasions including confining the paging occasions in the time domain. Therein, it is desirable to have no negative impact to legacy UEs, unless significant benefits are shown.

Fourthly, the corresponding core requirements for the above features are to be specified.

### PRACH adaptation in time domain

In the following, adaptation of PRACH in time domain will be discussed as an example of the common channel adaptation. It is noted that although details issues regarding common channel adaptation are exemplified for PRACH, the present disclosure generally relates to common channel adaptation, including other common channels, such as paging, or SSB (synchronization signal block).

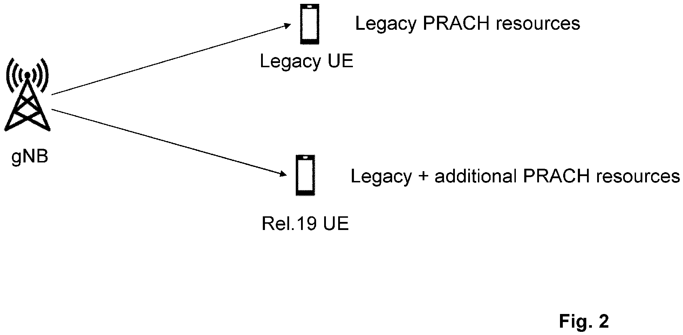

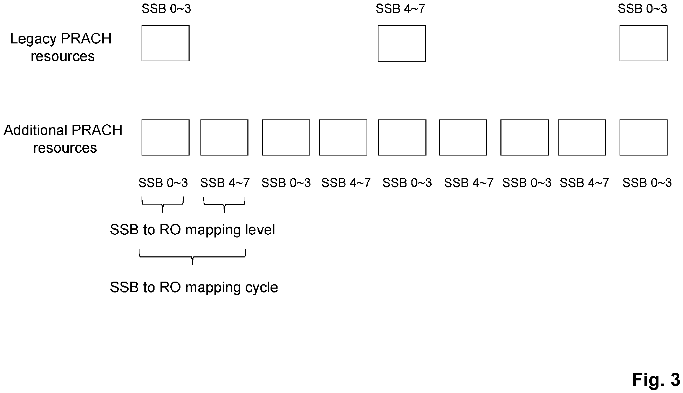

As mentioned above, in 3GPP 5G Release 19, PRACH adaptation in time domain is being considered. For instance, a gNB may have legacy PRACH resources and additional PRACH resources configured. As shown in **Fig. 2****,** legacy UEs of releases prior to Release 19 can use legacy PRACH resources, and Rel. 19 UEs can use both legacy resources and additional PRACH resources. In a case where legacy PRACH resources are sparsely present in time domain, time domain adaptation of PRACH can be carried out for the NES UEs on the additional PRACH resources, in accordance with the requirements of the gNB. An example of a configuration of legacy and additional PRACH resources in time domain is illustrated in **Fig. 3****.**

For the adaptation of PRACH in time domain, the additional PRACH resources may be configured by higher layer signaling, e.g. by SIB or RRC signaling. As a mechanism for indicating whether or not the configured additional PRACH resources are available for a UE, the network may transmit a DCI-based indication to the UE, for example in form of a single bit or multi-bits indication. For example, it is suggested that DCI format 1_0, DCI format 2_7 or other formats may be used to carry the DCI-based indication for indicating the availability of the configured additional PRACH resources for UEs in RRC idle/inactive mode (e.g. RRC_IDLE/RRC_INACTIVE) and for UEs in RRC connected mode (e.g. RRC_CONNECTED). The DCI carrying the DCI-based indication may be scrambled by a Paging Radio Network Temporary Identifier (P-RNTI), Paging Early Indication-RNTI (PEI-RNTI) or other types of RNTI.

The additional PRACH resources may be configured based on at least a PRACH configuration index. The PRACH configuration index defines a pointer to a row within lookup table as specified e.g. by 3GPP TS 38.211, see e.g. 3GPP TS 38.211, Physical channels and modulation, V18.3.0 (2024-06), section 6.3.3.2 "Mapping to physical resources and Tables 6.3.3.2-2 to 6.2.2.3-4. Thereby, the PRACH configuration index specifies parameters including time and frequency resources in terms of radio frames (whether PRACH occasions exist in even or odd radio frames), subframe number, number of PRACH slots within subframe, time domain PRACH occasions within PRACH slot, and PRACH duration in symbols, as well as preamble format. A UE obtains a PRACH configuration index e.g. from system information (SIB1, system information block 1) or RRC information.

It needs to be specified whether the PRACH configuration index for the additional PRACH resources for NES capable UEs may be the same or different from the PRACH configuration index for legacy PRACH resources. For instance, there may be a common lookup table or separate lookups tables provided for legacy and additional PRACH resources.

When the PRACH configuration index for the additional PRACH resources is same as the PRACH configuration index for the legacy resource, it is to be studied which additional parameters are to be defined for determining the additional PRACH resources. Therein, possible parameters to be studied include the PRACH configuration period, which may be scaled or adjusted, an additional timing offset, and adjustment of the parameters of the PRACH configuration (e.g. as specified in the lookup table), such as (x,y) value and slot number of the PRACH configuration, or parameters relating to muting and/or masking of PRACH resource occasions (random access occasions or, for short, "ROs"). The parameters (x,y) indicate whether PRACH occasions exist in even or odd radio frames and indicate a PRACH configuration period (e.g. a duration of one frame (10 ms), or two frames (20 ms)). "Muting" and "masking" refer to techniques by which the gNB signals to the UE that PRACH resource occasions among configured PRACH resource occasions are not available or to make the PRACH resources unusable for the UE.

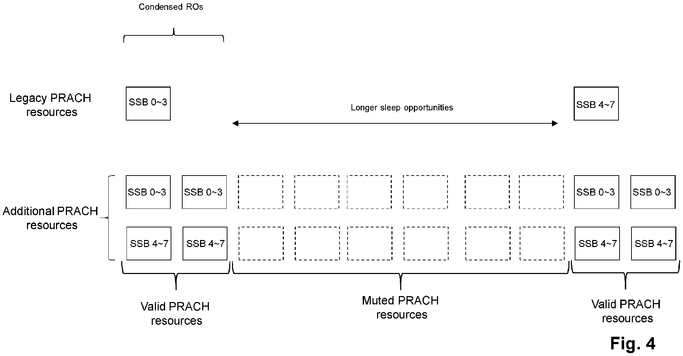

When the PRACH configuration index is different from the PRACH configuration index for the legacy resource, additional mechanisms and/or parameters may need to be studied as well. These may include muting or masking of ROs, e.g. for the case when the PRACH configuration index for the additional PRACH resources indicates resources containing legacy PRACH resources. It may be further considered whether parameters to facilitate condensed/cluster RACH resources in time domain, illustrated in **Fig. 4**, are needed, and such parameters may be specified.

For example, a single PRACH mask provided by semi-static signalling, like SIB signalling or RRC signalling, can be used to identify the subset of the configured additional PRACH resources. For example, a PRACH mask may be configured by use of one or more validity time window(s) or invalidity time window(s), which delimits the valid resource occasions for the common channel within a set of configured additional PRACH resources and/or the muted resource occasions for the common channel within a set of configured additional PRACH resources (see **Fig. 4****).** Alternatively, the PRACH mask may be configured by use of one or more bitmap(s) or codepoint(s) indicating the valid resource occasions for the common channel within a set of configured additional PRACH resources.

### PRACH adaptation time periods

"SSB-to-RO mapping" refers to an association between Synchronization Signal Blocks (SSB) and PRACH resource occasions (ROs). Since in beamforming scenarios, each SSB is associated with a spatial direction or beam (or pair of transmission and reception beam), the SSB-to-RO mapping facilitates for the gNB to identify which beam a UE is using for transmitting in a given RO. The "SSB-to-RO mapping level" (or RO level per SSB) signifies the number of SSBs, which are mapped per available RO. In other words, the SSB-to-RO mapping level defines a period having a duration corresponding to a number of ROs mapped to a single SSB. For example, the SSB-to-RO mapping level may be 2, 4, 8, or 16, which means that 2, 4, 8 or 16 SSBs are mapped per one available resource occasion, so that the SSB-to-RO mapping level defines a period having a duration of 2, 4, 6, 8, or 16 ROs respectively. Alternatively, the SSB-to-RO mapping level may be 1, 1/2, 1/4, or 1/8, which means that one SSB is mapped per 1, 2, 4, or 8 available resource occasions, so that the SSB-to-RO mapping level defines a period having a duration of 1 RO, respectively. Other SSB-to-RO mapping levels are also possible. Especially, the UE may obtain the "SSB-to-RO mapping level" (or "RO level per SSB") from the parameter *ssb-perRACH-OccasionAndCB-PreamblesPerSSB* of the *RACH-ConfigCommon* configuration (see 3GPP TS 38.331, Radio Resource Control (RRC) protocol specification, V18.4.0 (2024-12), section 6.3.2 "Radio resource control information elements", for a definition of the information element "RACH-*ConfigCommon*").

In the example depicted in **Fig. 3****,** the SSB-to-RO mapping level is four, which means that each group of four SSBs corresponding to four beams ("SSB 0~3" or "SSB 4~7", the same notation is also used in other figures of the present disclosure) out of eight SSBs with indices 0 to 7 is mapped to a RO.

The "SSB-to-RO mapping cycle" is determined by the number of SSBs mapped to a RO and defines a period, during which each SSB is mapped at least once to PRACH resource occasions within the mapping cycle. In the example of **Fig. 3****,** for example the SSB-to-RO mapping cycle has a duration of two ROs. The "SSB-to-RO mapping cycle" can be determined by the UE from the "SSB-to-RO mapping level" (or "RO level per SSB"), which is obtained from the parameter ssb-*perRACH-OccasionAndCB-PreamblesPerSSB* of the *RACH-ConfigCommon* configuration.

The "PRACH association period" defines a period, during which a configured number ${N}_{Tx}^{SSB}$ of SS/PBSCH block (Synchronization Signal / Physical Broadcast Channel blocks) indexes are mapped at least once to PRACH resource occasions within the mapping cycle. SS/PBCH is a downlink transmission used by the UE in the cell search procedure, including the Primary Synchronization Signal, the Secondary Synchronization Signal, and the Physical Broadcast Channel. The UE may obtain ${N}_{Tx}^{SSB}$ from the value of *ssb-PositionsInBurst* configured in *SIB1* or *ServingCellConfigCommon.* If after an integer number of SS/PBCH block indexes to PRACH occasions mapping cycles within the association period there is a set of PRACH occasions or PRACH preambles that are not mapped to ${N}_{Tx}^{SSB}$ SS/PBCH block indexes, no SS/PBCH block indexes are mapped to the set of PRACH occasions or PRACH preambles. The "PRACH association period" may in some configurations correspond to the "SSB-to-RO mapping cycle", but can also be longer than the "SSB-to-RO mapping cycle" in other configurations.

The "PRACH association pattern period" includes one or more association periods and is determined so that a pattern between PRACH occasions and SS/PBCH blocks repeats at most every 160 msec (see 3GPP TS 38.213, NR Physical layer procedures for control, V18.5.0 (2024-12), section 8.1 "Random access preamble", for more details on the definition of the association period and association pattern period). The "PRACH association pattern period" may be equal or shorter than 160 ms.

### Further Improvements

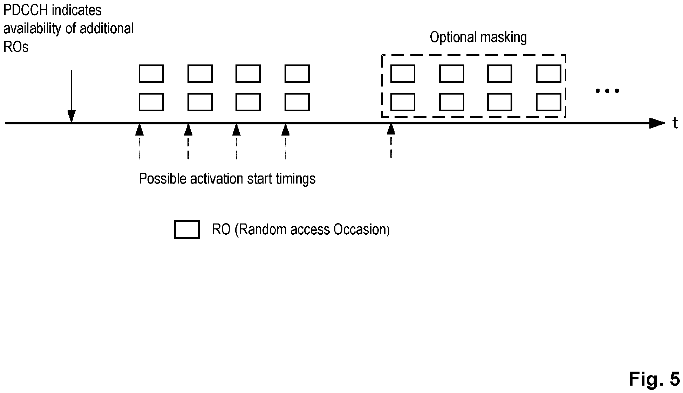

In view of the above, the inventors have identified the following issues to be considered in scenarios where common channel adaption (e.g. application of additional PRACH resources for Rel. 19 UEs in addition to the legacy resources, as mentioned above) is to be carried out. As set out above, in a possible implementation scenario a UE may receive a DCI message, including a single bit, as an indication whether or not semi-statically configured resource occasions (ROs) for the common channel (e.g. the PRACH) are available. **Fig. 5** shows an example, where the UE receives an availability indication indicating the availability of additional ROs for a common channel in a DCI message through the PDCCH at a first timing.

However, one issue identified by the inventors is that a transition period handling between the reception of the availability indication and the start of the application of the additional ROs is not discussed yet. Accordingly, it is not clear for the UE in the example of **Fig. 5****,** from which of the possible start timings on, the additional ROs are indicated to be available.

As a further issue, it is not clear for the UE, if masking is configured whether the availability indication points to the first additional resource (or resource opportunity) configured for the common channel or to the first actually valid additional resource identified by the configured mask (e.g. through a validity time window or an invalidity time window).

Another point identified by the inventors is that a validity period of the availability indication has not been agreed yet, so that it is not clear for the UE for which duration the availability indication is valid and the additional ROs are available. Similar, it is not clear how the UE should behave, if the common channel is PRACH and the UE starts a random access procedure by using one of the available additional resources and later the base station indicates the non-availability (e.g. OFF) of the additional PRACH resources.

The inventors have therefore identified the possibility of providing an improved common channel adaption procedure and parts thereof, which facilitate meeting the above needs and avoiding one or more of the disadvantages described above. The present invention relates to various solutions and variants for such improved common channel adaption procedure, and especially an common channel adaption procedure for determining a start timing for applying (configured) additional resources (or resource occasions) for the common channel.

### Solutions

In the following, communication devices which may be UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio (NR) access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes. The mobile station or mobile node or user terminal or user equipment (UE) is a first example of a communication apparatus within a communication network.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system. The base station or radio base station is a second example of a communication apparatus within a communication network.

Communication between the UE and the base station is typically standardized and may be defined by different layers, such as PHY, MAC, RRC etc. (see above background discussion).

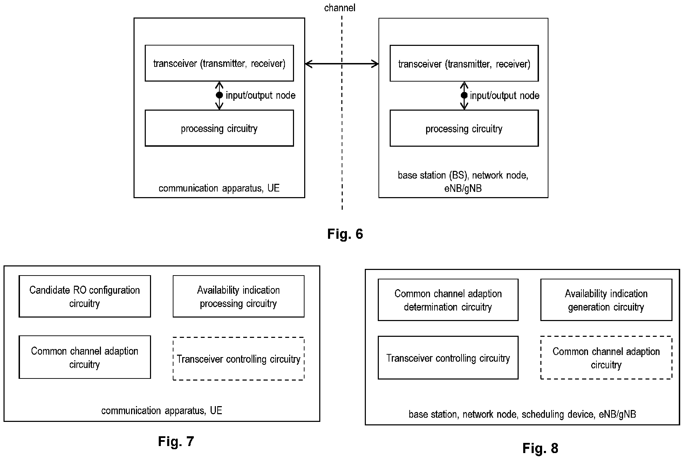

**Fig. 6** illustrates a general, simplified and exemplary block diagram of a UE (also termed communication device/apparatus) and a scheduling device (also termed network node or communication device/apparatus, here exemplarily assumed to be located in the base station, e.g., the gNB in 5G NR). The UE and gNB are communicating with each other over a (wireless) physical channel respectively using their transceiverers.

The communication devices may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved common channel adaption procedures will be described in the following, which facilitate for a UE and a base station to perform improved common channel adaption. In said connection, improved UEs, improved base stations and improved integrated circuits are presented, which participate separately or together in the improved common channel adaption. Corresponding methods for the UE behavior and the base station behavior are provided as well. The integrated circuits may correspond to the UE and base station, and respectively their behavior.

The present solutions of the improved common channel adaption procedure can be based on some or a combination of the different mechanisms described above in context of the exemplary 3GPP 5G-NR implementations, including e.g. the use of the common channel (e.g. PRACH) RO configuration mechanisms or details on the implementation scenarios (see e.g. the sections *"PRACH adaptation in time domain" and "PRACH adaptation time periods"*) as currently discussed in 3GPP.

**Fig. 7** illustrates a simplified and exemplary structure of the processing circuitry of the communication apparatus (e.g. a UE) according to an exemplary implementation of the improved common channel adaption procedure, which can be implemented based on the general UE structure explained in connection with **Fig. 6****.** The various structural elements of the processing circuitry illustrated in said **Fig. 7** can be interconnected between one another e.g., with corresponding input/output nodes (not shown) e.g., in order to exchange control and user data and other signals. Although not shown for illustration purposes, the communication apparatus may include further structural elements.

As apparent from **Fig. 7****,** the processing circuitry of the UE may include candidate RO configuration circuitry, availability indication processing circuitry, and common channel adaption circuitry. The candidate RO configuration circuitry, in operation, obtains a set of candidate resource occasions for the common channel from a configuration of the additional resource occasions. The availability indication processing circuitry, in operation, determines a start timing for applying the additional resource occasions among the set of candidate resource occasions, based on a reception timing of the first indication. The common channel adaption circuitry, in operation, starts to apply the additional resource occasions from the determined start timing.

Optionally, the processing circuitry of the UE may further include transceiver controlling circuitry. In the present case, as will become apparent from the below disclosure, the common channel adaption circuitry and/or the transceiver controlling circuitry can thus be exemplarily configured to control the transceiver to perform reception, transmission, and/or monitoring of the common channel on at least one of the additional resource occasions.

In the present case as will become apparent from the below disclosure, the transceiver of the communication apparatus can thus be exemplarily configured to at least partly perform one or more of receiving the first indication from the base station and optionally perform at least one of reception, transmission, and/or monitoring of the common channel on at least one of the additional resource occasions, etc.

One exemplary procedure as will be disclosed in more detail further below is implemented by a communication apparatus (such as a UE) that includes the following. A transceiver of the communication apparatus, in operation, (is configured to) receives, a first indication indicating an availability of additional resource occasions for a common channel. A processing circuitry of the communication apparatus, in operation, (is configured to) obtains a set of candidate resource occasions for the common channel from a configuration of the additional resource occasions, determines a start timing for applying the additional resource occasions among the set of candidate resource occasions, based on a reception timing of the first indication, and starts to apply the additional resource occasions from the determined start timing.

A corresponding exemplary communication method comprises the following steps performed by a communication apparatus (e.g. a UE):
obtaining (S910) a set of candidate resource occasions for the common channel from a configuration of the additional resource occasions;
receiving (S920) a first indication indicating an availability of additional resource occasions for a common channel;
determining (S930) a start timing for applying the additional resource occasions among the set of candidate resource occasions, based on a reception timing of the first indication; and
starting to apply (S940) the additional resource occasions from the determined start timing.

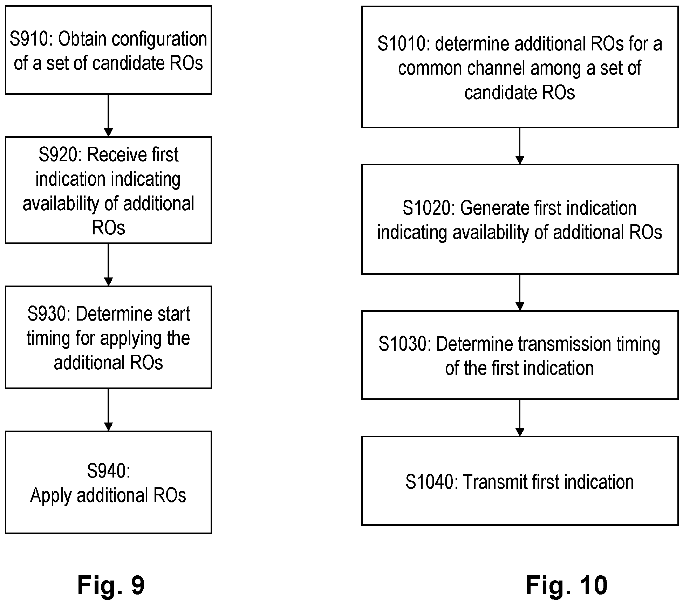

A corresponding sequence diagram for an exemplary UE behavior in line with the above-discussed UE and UE method is illustrated in **Fig. 9****.** The above-described common channel adaption procedure thus achieves the object and overcomes some of the drawbacks explained above. For instance, the improved common channel adaption procedure facilitates for a UE to determine, the timing of applying additional resources or resource occasion for a common channel. In this respect, the improved common channel adaption procedure facilitates the indication process of additional resources for the base station and the determination process of additional resources for the UE. In this manner, the improved common channel adaption procedure facilitates for the UE and the base station to reach at a synchronized understanding of when (at which timings and for which period) to apply the addition common channel resources (or resource occasions).

Some exemplary implementations of the improved common channel adaption procedure also involve improved base stations. Correspondingly, the improved common channel adaption procedure also provides improved base stations that participate therein, as will be explained in the following.

**Fig. 8** illustrates a simplified and exemplary structure of the processing circuitry of a base station according to an exemplary implementation of the common channel adaption procedure, which can be implemented based on the general base station structure explained in connection with **Fig. 6****.** The various structural elements of the processing circuitry illustrated in said **Fig. 8** can be interconnected between one another e.g., with corresponding input/output nodes (not shown) e.g., in order to exchange control and user data and other signals. Although not shown for illustration purposes, the base station may include further structural elements.

As apparent from **Fig. 8****,** the processing circuitry of the base station may include common channel adaption determination circuitry, availability indication generation circuitry and transceiver controlling circuitry. The common channel adaption determination circuitry, in operation, determines additional resource occasions for a common channel among a set of candidate resource occasions, with which a communication apparatus (e.g. a UE) is configured. The availability indication generation circuitry, in operation, generates a first indication, indicating to the communication apparatus an availability of the additional resource occasions. The transceiver controlling circuitry, in operation, determines a transmission timing of the first indication, the transmission timing being usable by the communication apparatus to determine a start timing for applying the additional resource occasions.

Optionally, the processing circuitry may include common channel adaption circuitry. The common channel adaption circuitry, in operation, may start to apply the additional resource occasions from the determined based on the transmission timing of the first indication. In the present case, as will become apparent from the below disclosure, the transceiver controlling circuitry and/or the common channel adaption circuitry can thus be exemplarily configured to control the transceiver to perform reception, transmission, and/or monitoring of the common channel on at least one of the additional resource occasions.

In the present case as will become apparent from the below disclosure, the transceiver of the base station can thus be exemplarily configured to at least partly perform one or more of transmitting the first indication to the communication apparatus at the transmission timing to perform reception, transmission, and optionally perform at least one of reception, transmission, and/or monitoring of the common channel on at least one of the additional resource occasions, etc.

The processing circuitry of the base station may implement more functionality than the above-mentioned adaption of the common channel, as it may, for instance, further configure a set of candidate resource occasions for the common channel or generate and control the transceiver to transmit corresponding configuration information on the set of candidate resource occasions to the communication apparatus (e.g. a UE).

One exemplary procedure as will be disclosed in more detail further below is implemented by a base station that includes the following. A processing circuitry of the base station, in operation, (is configured to) determines additional resource occasions for a common channel among a set of candidate resource occasions, with which a communication apparatus is configured, generates a first indication, indicating to the communication apparatus an availability of the additional resource occasions, and determines a transmission timing of the first indication, the transmission timing being usable by the communication apparatus to determine a start timing for applying the additional resource occasions. A transceiver of the base station, in operation, (is configured to) transmits the first indication to the communication apparatus at the transmission timing.

A corresponding method comprises the following steps performed by the base station:
determining (S1010) additional resource occasions for a common channel among a set of candidate resource occasions, with which a communication apparatus is configured;
generating (S1020) a first indication, indicating to the communication apparatus an availability of the additional resource occasions;
determining (S1030) a transmission timing of the first indication, the transmission timing being usable by the communication apparatus to determine a start timing for applying the additional resource occasions; and
transmitting (S1040) the first indication to the communication apparatus at the transmission timing.

A corresponding sequence diagram for an exemplary base station behavior in line with the above-discussed communication apparatus and corresponding method is illustrated in **Fig. 10****.** The sequence diagram illustrates an exemplary and simplified implementation of the above presented base station method. As illustrated, the method may further comprise an optional step of configuring a set of candidate resource occasions for the common channel and generating corresponding configuration information, which may include, for example, information on the common channel adaption operation.

In accordance with the present disclosures, as applies for the communication apparatus and the base station as well as the corresponding methods, **"common channel",** which may also be called "common signal", refers to a channel or signal, shared by a plurality of or even all UEs within a cell. Examples of common channel, to which the present disclosure is applicable, include SIB(s) (system information block), PRACH (Physical Random Access Channel), paging, or SSB. Thus, although according to one exemplary assumption, in the following disclosure, the resource (occasion) adaption is assumed to be performed for the PRACH as the common channel, the present disclosure and its embodiments are also applicable to other common channels.

As used herein, the term **"additional resource occasions"** or **"additional resources"** may relate to a subset of a previously configured set of candidate ROs (or resources). The additional ROs (or resources) are those ROs (or resources) considered as "available" or "actually applicable" for monitoring, transmission and/or reception on the common channel. The additional ROs (or resources) may be identified after applying a previously configured validity mask (or invalidity mask) on the set of candidate ROs (or resources) to validate or mute some among the configured ROs (or resources).

In this context, it is noted that throughout this document, the terms *"additional resource occasion"* and *"additional resource"* may be used interchangeably. As will be described further, resources for the common channel, to be adapted in accordance with an indication, may include time domain resources at one or more temporal levels of granularity including radio frames, subframes, slots, resource occasions, or symbols, wherein the definition of these time resources may be in accordance with the specifications of 5G NR. In addition, resources for the common channel may include further domains such as frequency domain, spatial direction, code domain, etc.

Furthermore or alternatively, ***"adaptation"*** (or *"switching")* of a common channel and/or its resources may refer to the changing of an availability status of the additional ROs from *"not available"* to *"available",* or from *"available"* to *"not available".* In this context, an *"availability indication"* or ***"adaption indication"*** may in the following be represented for example by a *"positive"* indication, indicating to change the availability status of the additional ROs from not available to available, or by a *"negative"* indication, indicating to change the availability status of the additional ROs from available to not available. Other possible terms could be used for the terms "indication" and "indicate", such as "instruction" and "instruct".

In this context, the term **"start to apply"** the additional resource occasions may mean that the UE "activates" previously configured ROs (e.g. among the previously configured set of candidate resource occasions) as the additional ROs. Other possible terms could be used for the term "start to apply", such as **"activate", *"apply"*** or ***"validate the availability".*** The start of applying the additional ROs means that the UE determines the additional resources as actual available for performing reception, transmission, and/or monitoring of the common channel on the additional ROs from the starting timing of the application. Similar, the term **"stop to apply"** the additional resource occasions may mean that the UE "deactivates" available additional ROs. Other possible terms could be used for the term "stop to apply", such as **"deactivate", *"terminate to apply",* "cease to apply"** or ***"invalidate the availability".*** The stop of applying the additional ROs means that the UE determines the additional resources as unavailable for performing reception, transmission, and/or monitoring of the common channel from the stop timing of the application.

### First Solution

In the First Solution, the UE determines a start timing for applying the additional resource occasions based on a reception timing of a first availability indication (as an example of a "first indication"). The reception timing of the first availability indication may for example be the end of the slot or the end of the symbol, in which the first availability indication is received.

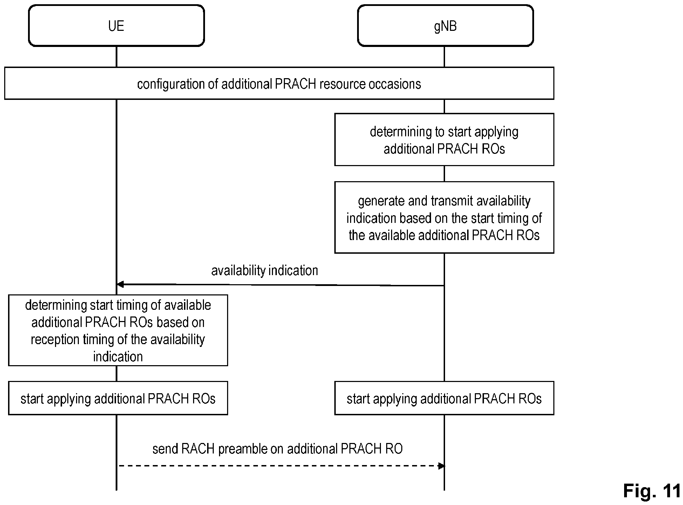

**Fig. 11** is a signaling diagram of an exemplary and simplified implementation of the improved common channel adaption procedure according to the First Solution, illustrating the exchange of messages between the different participating entities (here the UE and the gNB) and the steps performed at these entities. The UE behaviour and gNB behaviour follow the above-described UE and base station and the respective methods. As apparent from **Fig. 11****,** it is exemplarily assumed herein that the UE is configured with additional PRACH ROs (as an example of the additional common channel ROs) to be used for the improved common channel adaption procedure.

Here, the gNB is the network entity responsible for providing the additional PRACH RO configuration to the UE. Especially, the gNB may determine the configuration parameters of the additional PRACH RO configuration and may transmit a configuration indication (as an example of a third indication) to the UE, which specifies the configuration parameters of the additional PRACH RO configuration to be used by the UE. In particular, the configuration indication may be semi-statically signaled from the gNB to the UE. For example, the configuration indication may be included, in SIB message or in a RRC, message.

The UE receives the configuration indication and obtains the configuration parameters of the additional PRACH RO configuration from the configuration indication. More particularly, the UE obtains a set of candidate ROs for the PRACH from the additional PRACH RO configuration and its configuration parameters.

The gNB is also responsible for transmitting the availability indication to the UE, which triggers the application start (or validation of availability) of additional ROs. The UE in turn determines the start timing for applying the additional PRACH ROs among the previously configured set of candidate ROs, optionally (depending on the implementation of a solution) also taking into account the additional PRACH RO configuration (e.g. a validation mask or an invalidation mask).

As further apparent from **Fig. 11****,** in one example implementation, the gNB determines whether the UE should start applying additional PRACH ROs and if so what should be the start timing for applying the additional PRACH ROs. Depending on the result, the gNB then generates and transmits a suitable availability indication to the UE for indicating the UE of the availability of the additional PRACH ROs. Here, the availability indication is a positive indication, which instructs the UE to start applying ("switch ON") the additional PRACH ROs. In order to facilitate for the UE to determine the start timing for applying the additional PRACH ROs, based on a reception timing of the availability indication, the gNb determines a suitable transmission timing of the availability indication. Thus, the availability indication is transmitted by the gNB in a suitable manner and at a suitable timing (details on particular implementations will be presented further below). In particular, the availability indication may be indicated dynamically from the gNB to the UE. For example, the availability indication may be included in a DCI message. In some examples, the DCI message may have DCI format 1_0, or DCI format 2_7 and may be scrambled by a Paging Radio Network Temporary Identifier (P-RNTI), Paging Early Indication-RNTI (PEI-RNTI). In other examples, other DCI formats and scrambling with other RNTIs may be possible, too.

The UE in turn receives the availability indication, and then proceeds to determine the start timing for applying the additional PRACH ROs, as mentioned above, based on the reception timing of the availability indication and optionally (depending on the implementation of a solution) taking into account configuration parameters of the additional PRACH RO configuration (e.g. a validation mask or an invalidation mask).

As a result, the UE and gNB should have, if possible, a common understanding of which additional PRACH ROs among the set of candidates for the additional PRACH ROs are applied (or are valid), so as to thereby improve communication between them and allow the UE to use additional PRACH ROs for a random access procedure, if necessary. Accordingly, starting from the start timing (which is determined by the UE based on the reception timing of the availability indication and by the gNB based on the transmission timing of the availability indication), the UE starts considering the additional PRACH ROs for deciding whether to transmit a random access preamble on the additional PRACH ROs, and the gNB starts monitoring the additional PRACH ROs for determining whether the UE transmits the random access preamble.

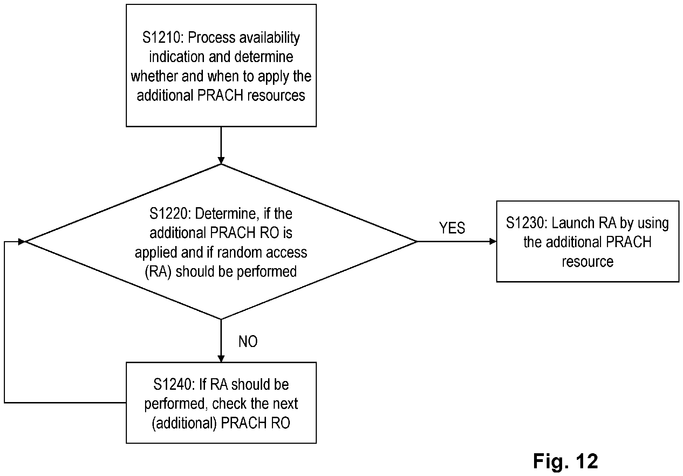

**Fig. 12** is a flow chart illustrating further details of the common channel adaption operation performed by a UE. After reception of the availability indication, the UE processes the availability indication and determines (S1210) whether and when to apply the additional PRACH ROs as described above. In the next step (S1220), the UE determines, if the additional PRACH ROs are applied and if the UE needs to perform random access. If the UE applies additional PRACH ROs and if random access needs to be performed (YES in S1220), the UE launches (S1230) random access (RA) by using at least one of the additional PRACH ROs. On the other hand, if the UE determines in step S1220 that one of the conditions is not fulfilled (NO in S1220), if RA should be performed, the UE determines to check (S1240) the next additional (or legacy) PRACH RO and the process returns to step S1220 for checking the next additional (or legacy) PRACH RO.

The solution according to **Figs. 11** **and** **12** has the advantage that the determination of the additional PRACH ROs is flexible and adaptive, because it is determined based on a reception timing (transmission timing) of the availability indication. In this manner, the First Solution facilitates more flexible control of the availability/validity of additional resources (or ROs) for a common channel, and facilitates energy saving for the network by switching ON/OFF additional resource for the common channel (e.g. the PRACH) more flexible.

### First exemplary implementation of the First Solution

According to a first exemplary implementation of the First Solution, the determining of the start timing (at the UE) includes obtaining a minimum waiting period between the reception timing of the first indication and the start timing and the UE starts to apply the additional resource occasions from the first additional resource occasion configured after the minimum waiting period has been passed since the reception timing of the first indication. Similar at the gNB, the determining of the transmission timing may include obtaining a minimum waiting period between the transmission timing of the first indication and the start timing for applying the additional resource occasions. In other words, in the first exemplary implementation of the First Solution the start timing may be set to the first resource occasion among the configured additional resource occasions, which is configured after the minimum waiting period has passed.

Other expressions instead of the "minimum waiting period" are also possible, such as "waiting time", "minimum delay period", "delay time", "minimum time offset", "time offset", etc. The minimum waiting period facilitates to ensure that the UE has enough processing time to process the availability indication (first indication) before the UE is expected by the gNB to apply the additional ROs.

In some examples, the minimum waiting period can be configured by the gNB at the UE in the additional PRACH RO configuration or in a similar configuration. In other examples, the minimum waiting period may be dynamically indicated to the UE, e.g. included in a DCI message.

In some examples, the minimum waiting period may be determined by the gNB based on the UE capability for processing the availability indication. For example, the UE may generate a capability report including an indication of the UE's capability to process the availability indication (e.g. a minimum processing time) and transmit the capability report to the gNB. For example, the capability report may be generated and transmitted by the UE in response to receiving a capability report request from the gNB. Based on the information obtained from the capability report, the gNB may configure the minimum waiting period at the UE or indicate the minimum waiting period to the UE.

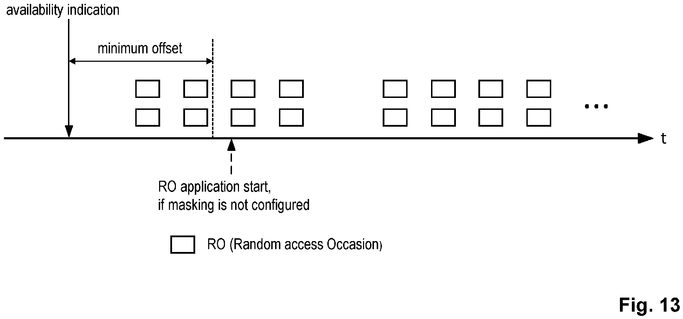

**Fig. 13** illustrates a schematic process diagram of the first exemplary implementation of the First Solution. In the illustrated example, the UE receives the availability indication at a reception timing. After receiving the availability indication, the UE waits until the minimum waiting period (or minimum offset time) starting from the reception timing (e.g. the end of the slot or symbol, in which the availability indication is received) is passed (or lapsed). In other words, after receiving the availability indication, the UE delays the start of applying the additional ROs at least for the duration of the minimum waiting period. In the illustrated example, where masking is not configured in the additional PRACH RO configuration (or where masking is not indicated), the UE sets the first additional PRACH RO, which follows the passing of the minimum waiting period, as the start timing (or starting point) for applying the additional PRACH ROs.

In a modification of the first exemplary implementation of the First Solution, masking may be configured in the additional PRACH RO configuration or in a similar configuration (or where masking is indicated to the UE). In the modification of the first exemplary implementation, the determining of the start timing includes determining a first valid resource occasion from the additional resource occasions after applying a validation mask, wherein the validation mask indicates valid resource occasions among the additional resource occasions, and the UE obtains the validation mask from the configuration of the additional resource occasions. In other words, in the modification of the first exemplary implementation of the First Solution the start timing may be set to the first resource occasion among the additional resource occasion, which is valid after applying the validation mask to the configured additional resource occasions.

For example, a validation mask may be configured by use of one or more validity time window(s), which delimits the valid resource occasions for the common channel (e.g. PRACH) within the set of configured additional resources and/or by use of invalidity time window(s), which delimits the muted resource occasions for the common channel (e.g. PRACH) within the set of configured additional resources (see **Fig. 4****).** Alternatively, the validation mask may be configured by use of one or more bitmap(s) or codepoint(s) indicating the valid resource occasions for the common channel (e.g. PRACH) within the set of configured additional resources.

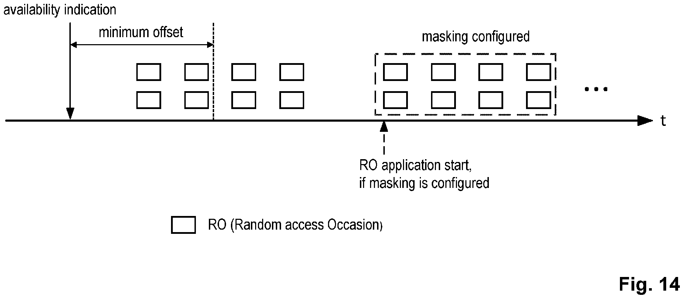

**Fig. 14** illustrates an example of the modification of the first exemplary implementation of the First Solution, which may be applied when masking is configured. In the illustrated example, the UE receives the availability indication at a reception timing. After receiving the availability indication, the UE waits until the minimum waiting period (or minimum offset time) starting from the reception timing (e.g. the end of the slot or symbol, in which the availability indication is received) is passed (or lapsed). In other words, after receiving the availability indication, the UE delays the start of applying the additional ROs at least for the duration of the minimum waiting period. In the illustrated example, where masking is configured in the additional PRACH RO configuration (or where masking is not indicated), the UE then sets the first valid PRACH RO, which is determined after applying the validation mask to the configured additional resource occasions and which follows the passing of the minimum waiting period, as the start timing (or starting point) for applying the additional PRACH ROs.

The minimum waiting period may be obtained by the UE as a number N_{OFFSET} of first unit time intervals. The number N_{OFFSET} may take a value of 0 (indicating an instant start of the application of the additional PRACH ROs from the reception of the availability indication) or may take a non-zero positive integer value (e.g., 1, 2, ...). In some examples, the number N_{OFFSET} can be configured by the gNB at the UE in the additional PRACH RO configuration or in a similar configuration. In other examples, the number N_{OFFSET} may be dynamically indicated to the UE, e.g. included in a DCI message.

Alternatively, the number N_{OFFSET} may be determined by a standard and, for example may be obtained by the UE from a firmware of the UE, and/or may be obtained by the gNB from a firmware of the gNB.

In a first implementation option, the first unit time interval is a slot. The first implementation option allows the gNB to switch ON the availability of the additional ROs at the UE on a slot level basis and thus facilitates for the gNB to more timely and dynamically adapt the common channel (PRACH) resources depending on application scenarios, e.g. depending on channel conditions, UE movement, number of UEs camping in a cell, etc. The first implementation option is thus advantageous for achieving a good energy saving gain, especially for targeting UEs, which are in RRC connected mode. Alternatively, in the first implementation option the first unit time interval can be an OFDM symbol.

In a second implementation option, the first unit time interval is a radio frame. The second implementation option allows the gNB to switch ON the availability of the additional ROs at the UE on a radio frame level basis. The second implementation option may be less dynamic than the first implementation option, but is also less complex. Thus, the second implementation option facilitates providing a good tradeoff between energy saving and UE/gNB complexity. Alternatively, in the second implementation option, the first unit time interval can be half a radio frame.

In a third implementation option, the first unit time interval is a paging cycle (or *"Idle Mode DRX"* cycle, short *"I-DRX cycle")* configured for an idle mode or an inactive mode of the communication apparatus. The third implementation option allows the gNB to switch ON the availability of the additional ROs at the UE on a paging cycle level basis. Thus, the third implementation option facilitates for the gNB to activate additional resources with a granularity that considers the On duration (active period) and the Off duration (sleep period) of the UE. The third implementation option may be suitable when target UEs are in RRC idle mode or in RRC inactive mode, and thus monitor the paging DCI once per paging cycle. Accordingly, the third implementation option may be configured/indicated for UEs being in RRC idle mode or in RRC inactive mode.

In some examples, the duration and/or the periodicity of the paging cycle (e.g. the duration and/or the periodicity of the I-DRX cycle) may be configured by SIB signaling (e.g. by I-DRX configuration parameters received by the UE in a SIB message). In other examples, the duration and/or the periodicity of the paging cycle (e.g. the duration and/or the periodicity of the I-DRX cycle) may be configured by SIB signaling and by NAS (Non-Access Stratum) signaling, e.g. by receiving I-DRX configuration parameters in a SIB message and by receiving I-DRX configuration parameters in a NAS message. In the latter case, the UE may apply the configuration received through the SIB signaling and obtain the duration and/or the periodicity of the paging cycle from the configuration received in a SIB message. But it is also possible in the latter case that the UE may apply the configuration received through the NAS signaling and obtain the duration and/or the periodicity of the paging cycle from the configuration received in a NAS message.

Alternatively or in addition, in the third implementation option for targeting UEs, which are in RRC connected mode, the first unit time interval may be a DTX cycle, like the Cell-DTX cycle, configured for a connected mode of the communication apparatus or the first unit time interval may be a DRX cycle, like the connected mode DRX ("C-DRX") cycle or the Cell-DRX cycle, configured for a connected mode of the communication apparatus. This facilitates for the gNB to activate additional resources with a granularity that considers the On duration (active period) and the Off duration (sleep period) of the UE in RRC connected mode.

In a fourth implementation option, the first unit time interval is a SSB-to-resource occasion mapping period (e.g. "RO-level per SSB" or "SSB-to-RO mapping level", see section "PRACH *adaptation time periods"* above) of the common channel (e.g. PRACH) configured for the communication apparatus or an SSB-to-resource occasion mapping cycle (e.g. "SSB-to-RO mapping cycle", see section *"PRACH adaptation time periods"* above) of the common channel (e.g. PRACH) configured for the communication apparatus. The fourth implementation option facilitates for the gNB to switch ON additional common channel (e.g. PRACH) resources with a granularity of the whole beam set level, or in other words with a granularity that corresponds to the mapping (cycle) of beams to ROs. This facilitates to achieve a lower gNB complexity and facilitates to balance the coverage of the additional ROs among all beams. Alternatively, in the fourth implementation option, the first unit time interval can be a common channel association period (e.g. *"PRACH association period*", see section *"PRACH adaptation time periods"* above) configured for the communication apparatus or a common channel association pattern period e.g. *"PRACH association pattern period",* see section *"PRACH adaptation time periods"* above) configured for the communication apparatus.

In some examples, the first unit time interval can be configured by the gNB at the UE in the additional PRACH RO configuration or in a similar configuration. Especially, in some examples, the gNB may configure combinations of the above described exemplary time units as the first unit time interval. In other examples, the first unit time interval may be dynamically indicated to the UE, e.g. included in a DCI message. Alternatively, the first unit time interval may be determined by a standard and, for example may be obtained by the UE from a firmware of the UE, and/or may be obtained by the gNB from a firmware of the gNB.

### Second exemplary implementation of the First Solution

While in the first exemplary implementation of the First Solution, the UE (and the base station) uses a relative offset time defined by the minimum waiting period to determine the starting timing for starting to apply the additional resource occasions, in the second exemplary implementation of the First Solution, the UE (and the base station) use boundaries of another configured periodic time interval for determining the starting timing for starting to apply the additional resource occasions. In this manner, the second exemplary implementation of the First Solution facilitates that the gNB and the UE have a same understanding of a reception interval or a transmission interval starting from when the availability indication is transmitted or received, in which the UE is expected by the gNB to start applying the additional ROs. At the same time, the second exemplary implementation of the First Solution facilitates providing a simpler design, which avoids a high gNB and/or UE complexity. Furthermore, large specification efforts may be avoided.

In the second exemplary implementation of the First Solution, the periodic time interval may be a paging cycle (or *"Idle Mode DRX"* cycle, short *"I-DRX cycle")* when the communication apparatus is in an idle mode or when the communication apparatus is in an inactive mode. In some examples, the duration and/or the periodicity of the paging cycle (e.g. the duration and/or the periodicity of the I-DRX cycle) may be configured by SIB signaling (e.g. by I-DRX configuration parameters received by the UE in a SIB message). In other examples, the duration and/or the periodicity of the paging cycle (e.g. the duration and/or the periodicity of the I-DRX cycle) may be configured by SIB signaling and by NAS (Non-Access Stratum) signaling, e.g. by receiving I-DRX configuration parameters in a SIB message and by receiving I-DRX configuration parameters in a NAS message. In the latter case, the UE may apply the configuration received through the SIB signaling and obtain the duration and/or the periodicity of the paging cycle from the configuration received in a SIB message. But it is also possible in the latter case that the UE may apply the configuration received through the NAS signaling and obtain the duration and/or the periodicity of the paging cycle from the configuration received in a NAS message.

Alternatively or in addition, the periodic time interval may be a discontinuous reception, DRX, cycle, like the connected mode DRX ("C-DRX") cycle or the Cell-DRX cycle or a discontinuous transmission, DTX, cycle, like the Cell-DTX cycle, when the communication apparatus is in a connected mode.

According to a first variant of the second exemplary implementation of the First Solution, the determining of the start timing includes determining a first additional resource occasion configured for a periodic time interval, in which the first indication is received, and the UE (and the gNB) starts to apply the additional resource occasions from the first additional resource occasion of the periodic time interval. In other words, in the first variant, the UE starts applying the additional resources for the common channel (e.g. PRACH), in a same periodic time interval, in which the availability indication is received. This facilitates that the gNB and the UE have a same understanding of a transmission interval or reception interval, in which the UE is expected by the gNB to start apply the additional ROs.

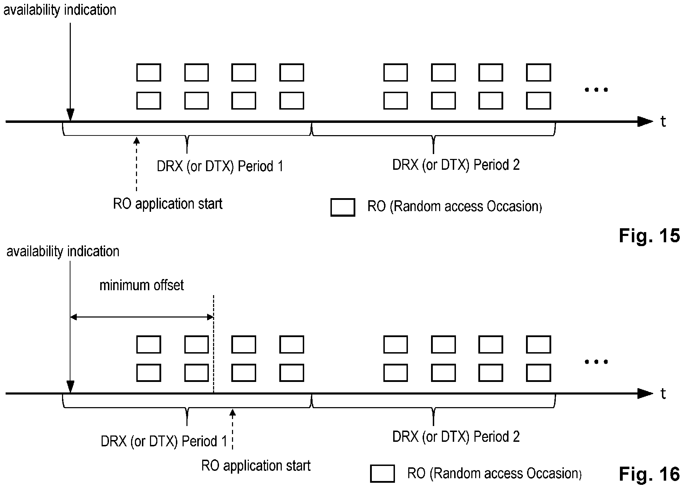

For example, if masking is not configured in the additional common channel RO configuration and not indicated to the UE, the UE sets the start timing of applying the additional ROs of the common channel (e.g. PRACH) to the first additional RO configured for the I-DRX cycle, DRX cycle or DTX cycle (depending on the RRC mode and the configuration), in which the availability indication is received (see **Fig. 15****).** For example, if masking is configured in the additional common channel RO configuration or indicated to the UE, same as in the modification of the first exemplary implementation, the UE sets the start timing to the first resource occasion among the additional resource occasion, which is valid for the I-DRX cycle, DRX cycle or DTX cycle (depending on the RRC mode and the configuration), in which the availability indication is received, after applying the validation mask.

According to a second variant of the second exemplary implementation of the First Solution, the UE may additionally, same as in the first exemplary implementation of the First Solution, consider the minimum waiting period when determining the start timing of applying the additional ROs. In other words, in the second variant the UE may set the start timing to the first resource occasion (or to the first valid resource occasion, if masking is configured) among the configured additional resource occasions, which is configured for the I-DRX cycle, DRX cycle or DTX cycle (depending on the RRC mode and the configuration), in which the availability indication is received, but may additional delay (or adjust) the start timing by meeting the minimum waiting period requirement after the reception of the availability indication (see **Fig. 16****).** This facilitates that the gNB and the UE have a same understanding of a transmission interval or reception interval, in which the UE is expected by the gNB to start apply the additional ROs, while the UE can have sufficient processing time to process the availability indication before it is expected by the gNB to apply the additional ROs. The minimum waiting period can be obtained by the UE in the ways described above for the first exemplary implementation of the First Solution. In other words, it can be said that in the second variant of the second exemplary implementation of the First Solution, the UE (and the gNB) combines the operations of the first variant of the second exemplary implementation of the First Solution and of the first exemplary implementation of the First Solution.

According to a third variant of the second exemplary implementation of the First Solution, the determining of the start timing includes determining a first additional resource occasion configured for a periodic time interval, which follows after the periodic time interval, in which the first indication is received, and the UE (and the gNB) starts to apply the additional resource occasions from the first additional resource occasion of the periodic time interval. In other words, in the third variant, the UE (and the gNB) starts applying the additional resources for the common channel (e.g. PRACH), in a periodic time interval, which is different from the periodic time interval, in which the availability indication is received (or transmitted).

The UE may start applying the additional resources in the first periodic time interval (i.e. M = 1), which follows the periodic time interval, in which the availability indication is received, or in the Mth periodic time interval, which follows the periodic time interval, in which the availability indication is received, wherein M may take positive integer values or zero. In some examples, the number M of periodic time intervals can be configured (by the gNB at the UE in the additional PRACH RO configuration or in a similar configuration. In other examples, the first unit time interval may be dynamically indicated to the UE, e.g. included in a DCI message. Alternatively, the number M of periodic time intervals may be determined by a standard and, for example may be obtained by the UE from a firmware of the UE, and/or may be obtained by the gNB from a firmware of the gNB.

In this manner, the third variant of the second exemplary implementation of the First Solution facilitates that the gNB and the UE have a same understanding of a transmission interval or reception interval, in which the UE is expected by the gNB to start applying the additional ROs.

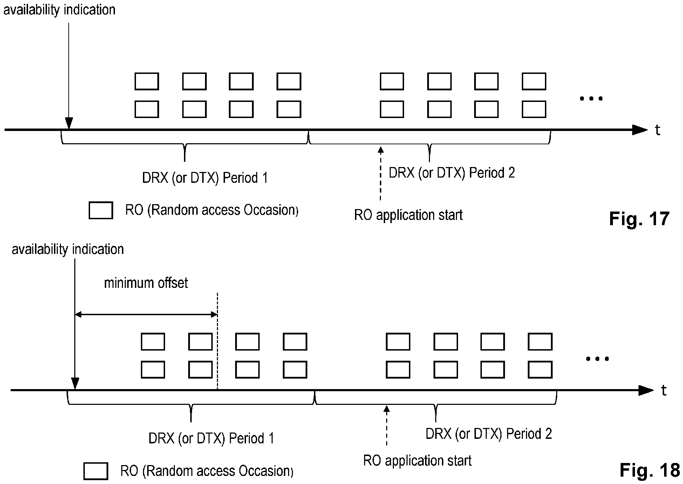

If masking is not configured in the additional common channel RO configuration and not indicated to the UE, the UE sets the start timing of applying the additional ROs of the common channel (e.g. PRACH) to the first additional RO configured in a starting I-DRX cycle, DRX cycle or DTX cycle (depending on the RRC mode and the configuration). Hereby, the starting I-DRX cycle, DRX cycle or DTX cycle is determined as the M-th I-DRX cycle, DRX cycle or DTX cycle (depending on the RRC mode and the configuration) following to the I-DRX cycle, DRX cycle or DTX cycle (depending on the RRC mode and the configuration), in which the availability indication is received (see **Fig. 17****,** where M is assumed to be 1). For example, if masking is configured in the additional common channel RO configuration or indicated to the UE, same as in the modification of the first exemplary implementation, the UE sets the start timing to the first resource occasion among the additional resource occasion, which is valid for the starting I-DRX cycle, DRX cycle or DTX cycle (depending on the RRC mode and the configuration).

According to a fourth variant of the second exemplary implementation of the First Solution, the UE may additionally, same as in the first exemplary implementation of the First Solution, consider the minimum waiting period when determining the start timing of applying the additional ROs. In other words, in the fourth variant the UE may set the start timing to the first resource occasion (or to the first valid resource occasion, if masking is configured) among the configured additional resource occasions, which is configured for the starting I-DRX cycle, DRX cycle or DTX cycle (depending on the RRC mode and the configuration), but may additional delay (or adjust) the start timing by meeting the minimum waiting period requirement after the reception of the availability indication (see **Fig. 18****,** where M is assumed to be 1). This facilitates that the gNB and the UE have a same understanding of a transmission interval or reception interval, in which the UE is expected by the gNB to start applying the additional ROs, while the UE can have sufficient processing time to process the availability indication before it is expected by the gNB to apply the additional ROs. The minimum waiting period can be obtained by the UE in the ways described above for the first exemplary implementation of the First Solution. In other words, it can be said that in the fourth variant of the second exemplary implementation of the First Solution, the UE (and the gNB) combines the operations of the third variant of the second exemplary implementation of the First Solution and of the first exemplary implementation of the First Solution.

In a fifth variant of the second exemplary implementation of the First Solution, the determining of the start timing includes determining a first additional resource occasion configured for a periodic time interval, which follows after the periodic time interval, in which the minimum waiting period has been passed since the reception timing of the first indication, and the UE (and the gNB), starts to apply the additional resource occasions from the first additional resource occasion of the periodic time interval. In other words, in the fifth variant, the UE (and the gNB) may start applying the additional resources for the common channel (e.g. PRACH), in a periodic time interval, which is different from the periodic time interval, in which the minimum waiting period has been passed.

### Second Solution

In the Second Solution, the UE determines a stop timing for applying the additional resource occasions and stops applying the additional resource occasions depending on the determined stop timing. The determination of the stop timing is based on a reception timing of a non-availability indication (as an example of a "second indication" or "second availability indication"), which the UE receives from the gNB. The reception timing of the non-availability indication may for example be the end of the slot or the end of the symbol, in which the non-availability indication is received. The Second Solution may be combined with the First Solution, to enable the gNB to alternately (dynamically) indicate to the UE the activation and the deactivation of the configured common channel resource occasions. But, in some implementations, the Second Solution may also be performed independently from the First Solution.

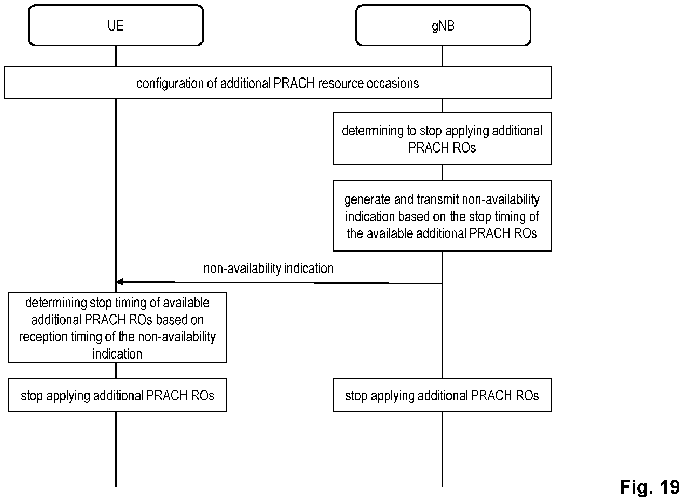

**Fig. 19** is a signaling diagram of an exemplary and simplified implementation of the improved common channel adaption procedure according to the Second Solution, illustrating the exchange of messages between the different participating entities (here the UE and the gNB) and the steps performed at these entities. The UE behaviour and gNB behaviour follow the above-described UE and base station and the respective methods. As apparent from **Fig. 19****,** it is exemplarily assumed herein that the UE is configured with additional PRACH ROs (as an example of the additional common channel ROs) to be used for the improved common channel adaption procedure. Hereby, the configuration of the additional PRACH ROs may be performed in analogy to the configuration operation described with respect to **Fig. 11****,** so that further details of the configuration operation are omitted here. Furthermore, it is assumed in **Fig. 19****,** that the application of additional PRACH ROs is started by the UE and the gNB, for example, by following the operations according to the First Solution and/or one (or more) of its exemplary implementations (not illustrated in **Fig. 19****).**

In the Second Solution, the gNB is also responsible for transmitting the non-availability indication to the UE, which triggers the application end (or invalidation of availability) of additional ROs. The UE in turn determines the stop timing for applying the additional PRACH ROs. As apparent from **Fig. 19****,** in one example implementation, the gNB determines whether the UE should stop applying additional PRACH ROs and if so what should be the stop timing for applying the additional PRACH ROs. Depending on the result, the gNB then generates and transmits a suitable non-availability indication to the UE for indicating the UE of the end of availability of the additional PRACH ROs. Here, the non-availability indication is a negative indication, which instructs the UE to stop applying ("switch OFF") the additional PRACH ROs. In order to facilitate for the UE to determine the stop timing for applying the additional PRACH ROs, based on a reception timing of the non-availability indication, the gNb determines a suitable transmission timing of the non-availability indication. Thus, the non-availability indication is transmitted by the gNB in a suitable manner and at a suitable timing (details on particular implementations will be presented further below). In particular, the non-availability indication may be indicated dynamically from the gNB to the UE. For example, the non-availability indication may be included in a DCI message. In some examples, the DCI message may have DCI format 1_0, or DCI format 2_7 and may be scrambled by a Paging Radio Network Temporary Identifier (P-RNTI), Paging Early Indication-RNTI (PEI-RNTI). In other examples, other DCI formats and scrambling with other RNTIs may be possible, too.

The UE in turn receives the non-availability indication, and then proceeds to determine the stop timing for applying the additional PRACH ROs, as mentioned above, based on the reception timing of the non-availability indication.

As a result, the UE and gNB should have, if possible, a common understanding of which additional PRACH ROs among the set of candidates for the additional PRACH ROs are applied and which are not applied, so as to thereby improve communication between them and allow the UE to use additional PRACH ROs for a random access procedure, if necessary. Accordingly, starting from the stop timing (which is determined by the UE based on the reception timing of the non-availability indication and by the gNB based on the transmission timing of the non-availability indication), the UE stops considering the additional PRACH ROs for deciding whether to transmit a random access preamble on the additional PRACH ROs, and the gNB stops monitoring the additional PRACH ROs for determining whether the UE transmits the random access preamble.

According to an exemplary implementation of the Second Solution, the determining of the stop timing (at the UE) includes obtaining a minimum delay period between the reception timing of the second indication and the stop timing and the UE determines the stop timing based on the reception timing of the second indication and the minimum delay period. The UE (and the gNB) stops to apply the additional resource occasions from the first additional resource occasion configured after the minimum delay period has been passed since the reception timing of the second indication. Similar at the gNB, the determining of the transmission timing of the second indication (e.g. the non-availability indication) may include obtaining the minimum delay period between the transmission timing of the second indication and the stop timing for applying the additional resource occasions. In other words, in the exemplary implementation of the Second Solution the stop timing may be set to the first resource occasion among the configured additional resource occasions, which is configured after the minimum waiting period has passed.

Other expressions instead of the "minimum delay period" are also possible, such as "second minimum waiting time", "second waiting time", "second minimum delay period", "second delay time", "second minimum time offset", "second time offset", etc., especially if the minimum waiting period of the First Solution is considered as a first minimum waiting time and so on. The minimum delay period facilitates to ensure that the UE has enough processing time to process the non-availability indication (second indication) before the UE is expected by the gNB to stop applying the additional ROs.

In some examples, the minimum delay period can be configured by the gNB at the UE in the additional PRACH RO configuration or in a similar configuration. In other examples, the minimum delay period may be dynamically indicated to the UE, e.g. included in a DCI message.

In some examples, the minimum delay period may be determined by the gNB based on the UE capability for processing the non-availability indication. For example, the UE may generate a capability report including an indication of the UE's capability to process the non-availability indication (e.g. a minimum processing time) and transmit the capability report to the gNB. For example, the capability report may be generated and transmitted by the UE in response to receiving a capability report request from the gNB. Based on the information obtained from the capability report, the gNB may configure the minimum waiting time at the UE or indicate the minimum waiting time to the UE.

The minimum delay period may be obtained by the UE as a number N_{DELAY} of second unit time intervals. The number N_{DELAY} may take a value of 0 (indicating an instant stop of the application of the additional PRACH ROs after the reception of the non-availability indication) or may take a non-zero positive integer value (e.g. 1, 2, ...). In some examples, the number N_{DELAY} may be configured by the gNB at the UE in the additional PRACH RO configuration or in a similar configuration. In other examples, the number N_{DELAY} may be dynamically indicated to the UE, e.g. included in a DCI message.

Alternatively, the number N_{DELAY} may be determined by a standard and, for example may be obtained by the UE from a firmware of the UE, and/or may be obtained by the gNB from a firmware of the gNB. In some examples, the number N_{DELAY} of the Second Solution and the number N_{OFFSET} of the First Solution may be set to the same number and may be obtained from a same (configuration) parameter.

In a first implementation option, the second unit time interval is a slot. The first implementation option allows the gNB to switch OFF the availability of the additional ROs at the UE on a slot level basis and thus facilitates for the gNB to more timely and dynamically adapt the common channel (PRACH) resources depending on application scenarios, e.g. depending on channel conditions, UE movement, number of UEs camping in a cell, etc. The first implementation option is thus advantageous for achieving a good energy saving gain, especially for targeting UEs, which are in RRC connected mode. Alternatively, in the first implementation option, the second unit time interval can be an OFDM symbol.

In a second implementation option, the second unit time interval is a radio frame. The second implementation option allows the gNB to switch OFF the availability of the additional ROs at the UE on a radio frame level basis. The second implementation option may be less dynamic than the first implementation option, but is also less complex. Thus, the second implementation option facilitates providing a good tradeoff between energy saving and UE/gNB complexity. Alternatively, in the second implementation option, the second unit time interval can be half a radio frame.

In a third implementation option, the second unit time interval is a paging cycle (or "*Idle Mode DRX"* cycle, short *"I-DRX cycle")* configured for an idle mode or an inactive mode of the communication apparatus. The third implementation option allows the gNB to switch OFF the availability of the additional ROs at the UE on a paging cycle level basis. Thus, the third implementation option facilitates for the gNB to deactivate additional resources with a granularity that considers the On duration (active period) and the Off duration (sleep period) of the UE. The third implementation option may be suitable when target UEs are in RRC idle mode or in RRC inactive mode, and thus monitor the paging DCI once per paging cycle. Accordingly, the third implementation option may be configured/indicated for UEs being in RRC idle mode or in RRC inactive mode.

In some examples, the duration and/or the periodicity of the paging cycle (e.g. the duration and/or the periodicity of the I-DRX cycle) may be configured by SIB signaling (e.g. by I-DRX configuration parameters received by the UE in a SIB message). In other examples, the duration and/or the periodicity of the paging cycle (e.g. the duration and/or the periodicity of the I-DRX cycle) may be configured by SIB signaling and by NAS (Non-Access Stratum) signaling, e.g. by receiving I-DRX configuration parameters in a SIB message and by receiving I-DRX configuration parameters in a NAS message. In the latter case, the UE may apply the configuration received through the SIB signaling and obtain the duration and/or the periodicity of the paging cycle from the configuration received in a SIB message. But it is also possible in the latter case that the UE may apply the configuration received through the NAS signaling and obtain the duration and/or the periodicity of the paging cycle from the configuration received in a NAS message.

Alternatively or in addition, in the third implementation option, the second unit time interval may be a DTX cycle, like the Cell-DTX cycle, configured for a connected mode of the communication apparatus or the second unit time interval may be a DRX cycle, like the connected mode DRX ("C-DRX") cycle or the Cell-DRX cycle, configured for a connected mode of the communication apparatus. This facilitates for the gNB to deactivate additional resources with a granularity that considers the On duration (active period) and the Off duration (sleep period) of the UE in RRC connected mode.

In a fourth implementation option, the second unit time interval is a SSB-to-resource occasion mapping period (e.g. "RO-level per SSB" or "SSB-to-RO mapping level", see section "PRACH *adaptation time periods*" above) of the common channel (e.g. PRACH) configured for the communication apparatus or an SSB-to-resource occasion mapping cycle (e.g. "SSB-to-RO mapping cycle", see section *"PRACH adaptation time periods"* above) of the common channel (e.g. PRACH) configured for the communication apparatus. The fourth implementation option facilitates for the gNB to deactivate additional common channel (e.g. PRACH) resources with a granularity of the whole beam set level, or in other words with a granularity that corresponds to the mapping (cycle) of beams to ROs. This facilitates to achieve a lower gNB complexity and facilitates to balance the coverage of the additional ROs among all beams. Alternatively, in the fourth implementation option, the second unit time interval can be a common channel association period (e.g. "*PRACH association period*", see section *"PRACH adaptation time periods"* above) configured for the communication apparatus or a common channel association pattern period e.g. "*PRACH association pattern period*", see section *"PRACH adaptation time periods"* above) configured for the communication apparatus.

In some examples, the second unit time interval can be configured by the gNB at the UE in the additional PRACH RO configuration or in a similar configuration. Especially, in some examples, the gNB may configure combinations of the above described exemplary time units as the second unit time interval. In other examples, the second unit time interval may be dynamically indicated to the UE, e.g. included in a DCI message. Alternatively, the second unit time interval may be determined by a standard and, for example may be obtained by the UE from a firmware of the UE, and/or may be obtained by the gNB from a firmware of the gNB. In some examples, the second unit time interval of the Second Solution and the first unit time interval of the First Solution may be set to the same unit time interval and may be obtained from a same (configuration) parameter.

In a modification example of the Second Solution, the UE stops to apply the additional resource occasions at an ending point of a periodic time interval, in which the second indication is received. In other words, the UE may stop applying the additional resources for the common channel (e.g. PRACH), in a periodic time interval, in which the non-availability indication is received. Alternatively, the UE may stop to apply the additional resource occasions at an ending point of a periodic time interval, which follows after the periodic time interval, in which the second indication is received. In other words, the UE (and the gNB) stops applying the additional resources for the common channel (e.g. PRACH), in a periodic time interval, which is different from the periodic time interval, in which the non-availability indication is received (or transmitted). The periodic time interval may be configured at the UE and determined by the UE in a similar manner as described for the third variation of the second exemplary implementation of the First Solution above.

The Second Solution has the advantage that the determination of the switch OFF of additional PRACH ROs is flexible and adaptive, because it is determined based on a reception timing (transmission timing) of the non-availability indication. In this manner, the Second Solution facilitates more flexible control of the availability/validity of additional resources (or ROs) for a common channel, and facilitates energy saving for the network by switching ON/OFF additional resource for the common channel (e.g. the PRACH) more flexible.

### Third Solution

In the Third Solution, the UE determines a stop timing for applying the additional resource occasions and stops applying the additional resource occasions depending on the determined stop timing. The determination of the stop timing includes obtaining an availability period and the UE (and the gNB) stops applying the additional resource occasions after the availability period has been passed since the reception timing of the first indication. Accordingly, in the Third Solution the determination of the stop timing is based on the reception timing of the availability indication (as an example of a "first indication"), which the UE receives from the gNB as described for the First Solution. The Third Solution may be combined with the First Solution, to enable the gNB to indicate to the UE the activation and the deactivation of the configured common channel resource occasions by a single availability indication. But, in some implementations, the Third Solution may also be performed independently from the First Solution.

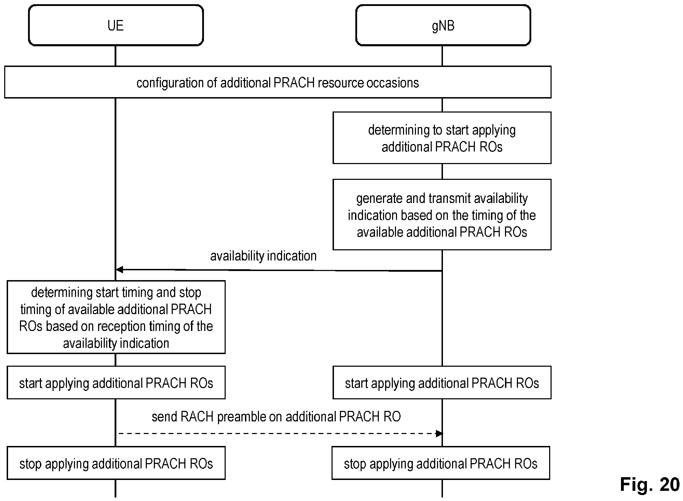

**Fig. 20** is a signaling diagram of an exemplary and simplified implementation of the improved common channel adaption procedure according to the Third Solution, illustrating the exchange of messages between the different participating entities (here the UE and the gNB) and the steps performed at these entities. The UE behaviour and gNB behaviour follow the above-described UE and base station and the respective methods. As apparent from **Fig. 20****,** it is exemplarily assumed herein that the UE is configured with additional PRACH ROs (as an example of the additional common channel ROs) to be used for the improved common channel adaption procedure. Hereby, the configuration of the additional PRACH ROs may be performed in analogy to the configuration operation described with respect to **Fig. 11****,** so that further details of the configuration operation are omitted here.

The gNB is also responsible for transmitting the availability indication to the UE, which triggers the application start (or validation of availability) of additional ROs. The UE in turn determines the start timing for applying the additional PRACH ROs among the previously configured set of candidate ROs, e.g. as described in one of the exemplary implementations of the First Solution. In addition, the UE determines the stop timing for applying the additional PRACH ROs based on the reception timing of the availability indication.

As further apparent from **Fig. 20****,** in one example implementation, the gNB determines whether the UE should start applying additional PRACH ROs and if so what should be the start timing for applying the additional PRACH ROs. Depending on the result, the gNB then generates and transmits a suitable availability indication to the UE for indicating the UE of the availability of the additional PRACH ROs. The availability indication may be transmitted in the same manner as described in the First Solution, so that further details on the availability indication are omitted here.

The UE in turn receives the availability indication, and then proceeds to determine the start timing and the stop timing for applying the additional PRACH ROs, as mentioned above, based on the reception timing of the availability indication and optionally (depending on the implementation of a solution) taking into account configuration parameters of the additional PRACH RO configuration (e.g. a validation mask or an invalidation mask).

As a result, the UE and gNB should have if possible a common understanding of which additional PRACH ROs among the set of candidates for the additional PRACH ROs are applied (or are valid), so as to thereby improve communication between them and allow the UE to use additional PRACH ROs for a random access procedure if necessary. Accordingly, starting from the start timing and until the stop timing (which both are determined by the UE based on the reception timing of the availability indication and by the gNB based on the transmission timing of the availability indication), the UE considers the additional PRACH ROs for deciding whether to transmit a random access preamble on the additional PRACH ROs, and the gNB monitors the additional PRACH ROs for determining whether the UE transmits the random access preamble.

As set out above, the determining of the stop timing (at the UE) includes obtaining an availability period between the reception timing of the first indication and the stop timing and the UE determines the stop timing based on the reception timing of the first indication and the availability period. The UE (and the gNB) stops to apply the additional resource occasions from the first additional resource occasion configured after the availability period has been passed since the reception timing of the second indication. Similar at the gNB, the determining of the transmission timing of the first indication (e.g. the availability indication) may include obtaining the availability period between the transmission timing of the second indication and the stop timing for applying the additional resource occasions. In other words, in the exemplary implementation of the Third Solution the stop timing may be set to the first resource occasion among the configured additional resource occasions, which is configured after the availability period has passed.

In some examples, availability period can be configured by the gNB at the UE in the additional PRACH RO configuration or in a similar configuration. In other examples, the availability period may be dynamically indicated to the UE, e.g. included in a DCI message.

The availability period may be obtained by the UE as a number N_{AVAIL} of third unit time intervals. The number N_{AVAIL} may take a non-zero positive integer value (e.g. 1, 2, ...). In some examples, the number N_{AVAIL} may be configured by the gNB at the UE in the additional PRACH RO configuration or in a similar configuration. In other examples, the number N_{AVAIL} may be dynamically indicated to the UE, e.g. included in a DCI message. Alternatively, the number N_{AVAIL} may be determined by a standard and, for example may be obtained by the UE from a firmware of the UE, and/or may be obtained by the gNB from a firmware of the gNB.

In a first implementation option, the third unit time interval is a slot. The first implementation option allows the gNB to make the additional ROs available at the UE for a duration determined on a slot level basis (e.g. for the duration of one or multiple slots) and thus facilitates for the gNB to timely and dynamically adapt the common channel (PRACH) resources depending on application scenarios, e.g. depending on channel conditions, UE movement, number of UEs camping in a cell, etc. The first implementation option is thus advantageous for achieving a good energy saving gain, especially for targeting UEs, which are in RRC connected mode. Alternatively, in the first implementation option, the third unit time interval can be an OFDM symbol.

In a second implementation option, the third unit time interval is a radio frame. The second implementation option allows the gNB to make the additional ROs available at the UE for a duration determined on a radio frame level basis (e.g. for the duration of one or multiple radio frames). The second implementation option may be less dynamic than the first implementation option, but is also less complex. Thus, the second implementation option facilitates providing a good tradeoff between energy saving and UE/gNB complexity. Alternatively, in the second implementation option, the third unit time interval can be half a radio frame.

In a third implementation option, the third unit time interval is a paging cycle (or "*Idle Mode DRX*" cycle, short "*I-DRX cycle")* configured for an idle mode or an inactive mode of the communication apparatus. The third implementation option allows the gNB to make the additional ROs available at the UE for a duration determined on a paging cycle level basis (e.g. for the duration of one or multiple paging cycle(s) or I-DRX cycle(s)). Thus, the third implementation option facilitates for the gNB to make additional resources available at the UE with a granularity that considers the On duration (active period) and the Off duration (sleep period) of the UE. The third implementation option may be suitable when target UEs are in RRC idle mode or in RRC inactive mode, and thus monitor the paging DCI once per paging cycle. Accordingly, the third implementation option may be configured/indicated for UEs being in RRC idle mode or in RRC inactive mode.

In some examples, the duration and/or the periodicity of the paging cycle (e.g. the duration and/or the periodicity of the I-DRX cycle) may be configured by SIB signaling (e.g. by I-DRX configuration parameters received by the UE in a SIB message). In other examples, the duration and/or the periodicity of the paging cycle (e.g. the duration and/or the periodicity of the I-DRX cycle) may be configured by SIB signaling and by NAS (Non-Access Stratum) signaling, e.g. by receiving I-DRX configuration parameters in a SIB message and by receiving I-DRX configuration parameters in a NAS message. In the latter case, the UE may apply the configuration received through the SIB signaling and obtain the duration and/or the periodicity of the paging cycle from the configuration received in a SIB message. But it is also possible in the latter case that the UE may apply the configuration received through the NAS signaling and obtain the duration and/or the periodicity of the paging cycle from the configuration received in a NAS message.

Alternatively or in addition, in the third implementation option for targeting UEs, which are in RRC connected mode, the third unit time interval may be a DTX cycle, like the Cell-DTX cycle, configured for a connected mode of the communication apparatus or the third unit time interval may be a DRX cycle, like the connected mode DRX ("C-DRX") cycle or the Cell-DRX cycle, configured for a connected mode of the communication apparatus. This facilitates for the gNB to make additional resources available at the UE with a granularity that considers the On duration (active period) and the Off duration (sleep period) of the UE in RRC connected mode.

In a fourth implementation option, the third unit time interval is a SSB-to-resource occasion mapping period (e.g. "RO-level per SSB" or "SSB-to-RO mapping level", see section "PRACH *adaptation time periods*" above) of the common channel (e.g. PRACH) configured for the communication apparatus or an SSB-to-resource occasion mapping cycle (e.g. "SSB-to-RO mapping cycle", see section *"PRACH adaptation time periods"* above) of the common channel (e.g. PRACH) configured for the communication apparatus. The fourth implementation option allows the gNB to make the additional ROs available at the UE for a duration determined on a whole beam set level (e.g. for the duration of one or multiple SSB-to-resource occasion mapping period(s) or SSB-to-resource occasion mapping cycle(s)), or in other words make the additional ROs available at the UE with a granularity that corresponds to the mapping (cycle) of beams to ROs. This facilitates to achieve a lower gNB complexity and facilitates to balance the coverage of the additional ROs among all beams. Alternatively, in the fourth implementation option, the third unit time interval can be a common channel association period (e.g. *"PRACH association period",* see section *"PRACH adaptation time periods"* above) configured for the communication apparatus or a common channel association pattern period e.g. *"PRACH association pattern period",* see section *"PRACH adaptation time periods"* above) configured for the communication apparatus.

In some examples, the third unit time interval can be configured by the gNB at the UE in the additional PRACH RO configuration or in a similar configuration. Especially, in some examples, the gNB may configure combinations of the above described exemplary time units as the third unit time interval. In other examples, the third unit time interval may be dynamically indicated to the UE, e.g. included in a DCI message. Alternatively, the third unit time interval may be determined by a standard and, for example may be obtained by the UE from a firmware of the UE, and/or may be obtained by the gNB from a firmware of the gNB. In some examples, the third unit time interval of the Third Solution and the first unit time interval of the First Solution may be set to the same unit time interval and may be obtained from a same (configuration) parameter.

The Third Solution has the advantage that the determination of the switch ON/OFF of additional PRACH ROs is flexible and adaptive, because it is determined based on a reception timing (transmission timing) of the availability indication. Furthermore, the Third Solution may facilitate providing the gNB and the UE with a simpler design and lower complexity, while keeping the specification impact small. Compared to the Second Solution, the Third Solution may allow for avoiding signaling overhead, because both the start timing and the stop timing of the application of addition ROs is based on the reception of the same (dynamic) indication information.

### FURTHER IMPLEMENTATIONS

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

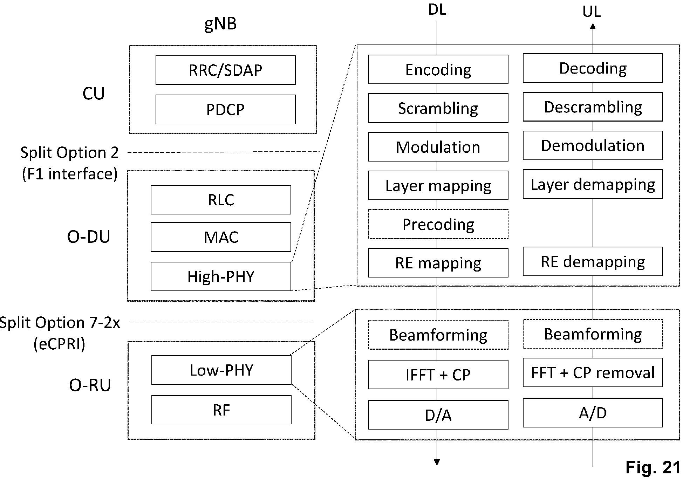

**Fig. 21** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient IoT Reader and an Ambient IoT Device. The channels in the present disclosure may be replaced with PSCCH, PSSCH, Physical Sidelink Feedback Channel (PSFCH), PSBCH, PRDCH (Physical Reader-to-Device Channel), PDRCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient IoT Device or an Ambient IoT Reader.

The Ambient IoT Device may be a wireless communication device having a backscattering function or having a transmission/reception bandwidth of several resource blocks or less. Further, the Ambient IoT Reader may be a wireless communication device having a communication function with an Ambient IoT Device. The Ambient IoT Device may also be referred to as an Ambient loT terminal, an loT terminal, an LPWA terminal, or a Tag.

### (Hardware and Software Implementation)

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, there is provided a communication apparatus, comprising a transceiver, which, in operation, receives a first indication indicating an availability of additional resource occasions for a common channel, and circuitry, which in operation, obtains a set of candidate resource occasions for the common channel from a configuration of the additional resource occasions, determines a start timing for applying the additional resource occasions among the set of candidate resource occasions, based on a reception timing of the first indication, and starts to apply the additional resource occasions from the determined start timing.

According to a second aspect, the determining of the start timing includes obtaining a minimum waiting period between the reception timing of the first indication and the start timing and the circuitry, in operation, starts to apply the additional resource occasions from the first additional resource occasion configured after the minimum waiting period has been passed since the reception timing of the first indication.

According to a third aspect, the minimum waiting period is obtained from a number of first unit time intervals, wherein the number of first unit time intervals is zero or an integer equal to or larger than one, and the first unit time interval is one of the following: (i) a time resource unit, which is one or a combination of a slot, a radio frame or a symbol; (ii) a paging cycle configured for an idle mode or an inactive mode of the communication apparatus; (iii) a DTX cycle configured for a connected mode of the communication apparatus; (iv) a DRX cycle configured for a connected mode of the communication apparatus; (v) an SSB-to-resource occasion mapping period of the common channel configured for the communication apparatus; (vi) an SSB-to-resource occasion mapping cycle of the common channel configured for the communication apparatus; (vii) a common channel association period configured for the communication apparatus; or (viii) a common channel association pattern period configured for the communication apparatus.

According to a fourth aspect, the determining of the start timing includes determining a first additional resource occasion configured for a periodic time interval, in which the first indication is received, and the circuitry, in operation, starts to apply the additional resource occasions from the first additional resource occasion of the periodic time interval. In optional implementation, the periodic time interval is a paging cycle when the communication apparatus is in an idle mode or when the communication apparatus is in an inactive mode, and wherein the periodic time interval is a discontinuous reception, DRX, cycle or a discontinuous transmission, DTX, cycle, when the communication apparatus is in a connected mode.

According to a fifth aspect, the determining of the start timing includes determining a first additional resource occasion configured for a periodic time interval, which follows after the periodic time interval, in which the first indication is received, and the circuitry, in operation, starts to apply the additional resource occasions from the first additional resource occasion of the periodic time interval. In optional implementation, the periodic time interval is a paging cycle when the communication apparatus is in an idle mode or when the communication apparatus is in an inactive mode, and wherein the periodic time interval is a discontinuous reception, DRX, cycle or a discontinuous transmission, DTX, cycle, when the communication apparatus is in a connected mode.

According to a sixth aspect, the determining of the start timing includes determining a first additional resource occasion configured for a periodic time interval, which follows after the periodic time interval, in which the minimum waiting period has been passed since the reception timing of the first indication, and the circuitry, in operation, starts to apply the additional resource occasions from the first additional resource occasion of the periodic time interval. In optional implementation, the periodic time interval is a paging cycle when the communication apparatus is in an idle mode or when the communication apparatus is in an inactive mode, and wherein the periodic time interval is a discontinuous reception, DRX, cycle or a discontinuous transmission, DTX, cycle, when the communication apparatus is in a connected mode.

According to a seventh aspect, the determining of the start timing includes determining a first valid resource occasion from the additional resource occasions after applying a validation mask, wherein the validation mask indicates valid resource occasions among the additional resource occasions, and the circuitry, in operation, obtains the validation mask from the configuration of the additional resource occasions.

According to an eighth aspect, the circuitry, in operation, determines a stop timing for applying the additional resource occasions, and stops applying the additional resource occasions depending on the determined stop timing.

According to a ninth aspect, after receiving the first indication, the transceiver, in operation, receives a second indication indicating a non-availability of the additional resource occasions for the common channel, and the circuitry, in operation, determines the stop timing based on a reception timing of the second indication. In an optional implementation, the second indication is included in a dynamic control information, DCI, message.

According to a tenth aspect, the circuitry, in operation, obtains a minimum delay period between the reception timing of the second indication and the stop timing and determines the stop timing based on the reception timing of the second indication and the minimum delay period, wherein the minimum delay period is obtained from a number of second unit time intervals, wherein the number of second unit time intervals is zero or an integer equal to or larger than one, and wherein the second unit time interval is one of the following: (i) a time resource unit, which is one or a combination of a slot, a radio frame or a symbol; (ii) a paging cycle configured for an idle mode or an inactive mode of the communication apparatus; (iii) a DTX cycle configured for a connected mode of the communication apparatus; (iv) a DRX cycle configured for a connected mode of the communication apparatus; (v) an SSB-to-resource occasion mapping period of the common channel configured for the communication apparatus; (vi) an SSB-to-resource occasion mapping cycle of the common channel configured for the communication apparatus; (vii) a common channel association period configured for the communication apparatus; or (viii) a common channel association pattern period configured for the communication apparatus.

According to an eleventh aspect, the determination of the stop timing includes obtaining an availability period, and the circuitry, in operation, stops applying the additional resource occasions after the availability period has been passed since the reception timing of the first indication, wherein the availability period is obtained from a number of third unit time intervals, wherein the number of third unit time intervals is an integer equal to or larger than one, and wherein the third unit time interval is one of the following: (i) a time resource unit, which is one or a combination of a slot, a radio frame or a symbol; (ii) a paging cycle configured for an idle mode or an inactive mode of the communication apparatus; (iii) a DTX cycle configured for a connected mode of the communication apparatus; (iv) a DRX cycle configured for a connected mode of the communication apparatus; (v) an SSB-to-resource occasion mapping period of the common channel configured for the communication apparatus; (vi) an SSB-to-resource occasion mapping cycle of the common channel configured for the communication apparatus; (vii) a common channel association period configured for the communication apparatus; or (viii) a common channel association pattern period configured for the communication apparatus.

According to a twelfth aspect, the circuitry, in operation, stops to apply the additional resource occasions at an ending point of a periodic time interval, in which the second indication is received; and/or the circuitry, in operation, stops to apply the additional resource occasions at an ending point of a periodic time interval, which follows after the periodic time interval, in which the second indication is received. In an optional implementation, the ending point is a last additional resource occasion configured for the periodic time interval. In another optional implementation, the periodic time interval is a paging cycle when the communication apparatus is in an idle mode or when the communication apparatus is in an inactive mode, and the periodic time interval is a discontinuous reception, DRX, cycle or a discontinuous transmission, DTX, cycle, when the communication apparatus is in a connected mode.

According to a thirteenth aspect, the common channel is a physical random access channel, and/or the first indication is included in a dynamic control information, DCI, message.

According to a fourteenth aspect, before receiving the first indication, the transceiver, in operation, receives a third indication specifying the configuration of additional candidate resource occasions; and the obtaining of the configuration of additional candidate resource occasions includes obtaining the configuration of additional candidate resource occasions from the third indication. In an optional implementation the third indication is included in a system information block, SIB, message. In another optional implementation the third indication is included in a radio resource control, RRC, message.

According to a fifteenth aspect, there is provided a base station, comprising circuitry which, in operation, determines additional resource occasions for a common channel among a set of candidate resource occasions, with which a communication apparatus is configured, generates a first indication, indicating to the communication apparatus an availability of the additional resource occasions, and determines a transmission timing of the first indication, the transmission timing being usable by the communication apparatus to determine a start timing for applying the additional resource occasions, and a transceiver which, in operation, transmits the first indication to the communication apparatus at the transmission timing.

According to a sixteenth aspect, the circuitry, in operation, starts to apply the additional resource occasions depending on the transmission timing of the first indication.

According to an optional implementation, the circuitry of the base station may further preform one or a combination of the steps performed by the communication apparatus of any of the first to fourteenth aspects.

According to a seventeenth aspect, there is provided a method comprising the following steps performed by a communication apparatus: (i) receiving a first indication indicating an availability of additional resource occasions for a common channel; (ii) obtaining a set of candidate resource occasions for the common channel from a configuration of the additional resource occasions, (iii) determining a start timing for applying the additional resource occasions among the set of candidate resource occasions, based on a reception timing of the first indication, and (iv) starting to apply the additional resource occasions from the determined start timing.

According to an optional implementation, the method further includes one or a combination of the steps performed by the communication apparatus of any of the first to fourteenth aspects.

According to an eighteenth aspect, there is provided a method comprising the following steps performed by a base station: (i) determining additional resource occasions for a common channel among a set of candidate resource occasions, with which a communication apparatus is configured, (ii) generating a first indication, indicating to the communication apparatus an availability of the additional resource occasions, (iii) determining a transmission timing of the first indication, the transmission timing being usable by the communication apparatus to determine a start timing for applying the additional resource occasions, and (iv) transmitting the first indication to the communication apparatus at the transmission timing.

According to an optional implementation, the method further includes one or a combination of the steps performed by the base station of the fifteenth and the sixteenth aspects.

According to a nineteenth aspect, there is provided an integrated circuit for controlling a process of a communication apparatus (e.g. a UE), the process including: (i) receiving a first indication indicating an availability of additional resource occasions for a common channel; (ii) obtaining a set of candidate resource occasions for the common channel from a configuration of the additional resource occasions, (iii) determining a start timing for applying the additional resource occasions among the set of candidate resource occasions, based on a reception timing of the first indication, and (iv) starting to apply the additional resource occasions from the determined start timing.

According to an optional implementation, the process further includes one or a combination of the steps performed by the communication apparatus of any of the first to fourteenth aspects.

According to a twentieth aspect, there is provided an integrated circuit for controlling a process of a base station, the process including: (i) determining additional resource occasions for a common channel among a set of candidate resource occasions, with which a communication apparatus is configured, (ii) generating a first indication, indicating to the communication apparatus an availability of the additional resource occasions, (iii) determining a transmission timing of the first indication, the transmission timing being usable by the communication apparatus to determine a start timing for applying the additional resource occasions, and (iv) transmitting the first indication to the communication apparatus at the transmission timing.

According to an optional implementation, the process further includes one or a combination of the steps performed by the base station of the fifteenth and the sixteenth aspects.

## Claims

1. A communication apparatus, comprising:
a transceiver, which, in operation, receives a first indication indicating an availability of additional resource occasions for a common channel; and
circuitry, which in operation,
obtains a set of candidate resource occasions for the common channel from a configuration of the additional resource occasions,
determines a start timing for applying the additional resource occasions among the set of candidate resource occasions, based on a reception timing of the first indication, and
starts to apply the additional resource occasions from the determined start timing.

2. The communication apparatus according to claim 1, wherein the determining of the start timing includes obtaining a minimum waiting period between the reception timing of the first indication and the start timing and wherein the circuitry, in operation, starts to apply the additional resource occasions from the first additional resource occasion configured after the minimum waiting period has been passed since the reception timing of the first indication.

3. The communication apparatus according to claim 2, wherein the minimum waiting period is obtained from a number of first unit time intervals, wherein the number of first unit time intervals is zero or an integer equal to or larger than one, and wherein the first unit time interval is one of the following:
a time resource unit, which is one or a combination of a slot, a radio frame or a symbol;
a paging cycle configured for an idle mode or an inactive mode of the communication apparatus;
a DTX cycle configured for a connected mode of the communication apparatus;
a DRX cycle configured for a connected mode of the communication apparatus;
an SSB-to-resource occasion mapping period of the common channel configured for the communication apparatus;
an SSB-to-resource occasion mapping cycle of the common channel configured for the communication apparatus;
a common channel association period configured for the communication apparatus; or
a common channel association pattern period configured for the communication apparatus.

4. The communication apparatus according to one of claims 1 to 3, wherein the determining of the start timing includes determining a first additional resource occasion configured for a periodic time interval, in which the first indication is received, and wherein the circuitry, in operation, starts to apply the additional resource occasions from the first additional resource occasion of the periodic time interval;
optionally, wherein the periodic time interval is a paging cycle when the communication apparatus is in an idle mode or when the communication apparatus is in an inactive mode, and wherein the periodic time interval is a discontinuous reception, DRX, cycle or a discontinuous transmission, DTX, cycle, when the communication apparatus is in a connected mode.

5. The communication apparatus according to one of claims 1 to 3, wherein the determining of the start timing includes determining a first additional resource occasion configured for a periodic time interval, which follows after the periodic time interval, in which the first indication is received, and wherein the circuitry, in operation, starts to apply the additional resource occasions from the first additional resource occasion of the periodic time interval;
optionally; wherein the periodic time interval is a paging cycle when the communication apparatus is in an idle mode or when the communication apparatus is in an inactive mode, and wherein the periodic time interval is a discontinuous reception, DRX, cycle or a discontinuous transmission, DTX, cycle, when the communication apparatus is in a connected mode.

6. The communication apparatus according to claim 2 or 3, wherein the determining of the start timing includes determining a first additional resource occasion configured for a periodic time interval, which follows after the periodic time interval, in which the minimum waiting period has been passed since the reception timing of the first indication, and wherein the circuitry, in operation, starts to apply the additional resource occasions from the first additional resource occasion of the periodic time interval;
optionally, wherein the periodic time interval is a paging cycle when the communication apparatus is in an idle mode or when the communication apparatus is in an inactive mode, and wherein the periodic time interval is a discontinuous reception, DRX, cycle or a discontinuous transmission, DTX, cycle, when the communication apparatus is in a connected mode.

7. The communication apparatus according to one of claims 1 to 6, wherein the determining of the start timing includes determining a first valid resource occasion from the additional resource occasions after applying a validation mask, wherein the validation mask indicates valid resource occasions among the additional resource occasions, and wherein the circuitry, in operation, obtains the validation mask from the configuration of the additional resource occasions.

8. The communication apparatus according to one of claims 1 to 7, wherein the circuitry, in operation, determines a stop timing for applying the additional resource occasions, and stops applying the additional resource occasions depending on the determined stop timing.

9. The communication apparatus according to claim 8,
wherein after receiving the first indication, the transceiver, in operation, receives a second indication indicating a non-availability of the additional resource occasions for the common channel; and
wherein the circuitry, in operation, determines the stop timing based on a reception timing of the second indication;
optionally, wherein the second indication is included in a dynamic control information, DCI, message.

10. The communication apparatus according to claim 9, wherein the circuitry, in operation, obtains a minimum delay period between the reception timing of the second indication and the stop timing and determines the stop timing based on the reception timing of the second indication and the minimum delay period,
wherein the minimum delay period is obtained from a number of second unit time intervals, wherein the number of second unit time intervals is zero or an integer equal to or larger than one, and wherein the second unit time interval is one of the following:
a time resource unit, which is one or a combination of a slot, a radio frame or a symbol;
a paging cycle configured for an idle mode or an inactive mode of the communication apparatus;
a DTX cycle configured for a connected mode of the communication apparatus;
a DRX cycle configured for a connected mode of the communication apparatus;
an SSB-to-resource occasion mapping period of the common channel configured for the communication apparatus;
an SSB-to-resource occasion mapping cycle of the common channel configured for the communication apparatus;
a common channel association period configured for the communication apparatus; or
a common channel association pattern period configured for the communication apparatus.

11. The communication apparatus according to claim 8, wherein the determination of the stop timing includes obtaining an availability period; and
wherein the circuitry, in operation, stops applying the additional resource occasions after the availability period has been passed since the reception timing of the first indication,
wherein the availability period is obtained from a number of third unit time intervals, wherein the number of third unit time intervals is an integer equal to or larger than one, and wherein the third unit time interval is one of the following:
a time resource unit, which is one or a combination of a slot, a radio frame or a symbol;
a paging cycle configured for an idle mode or an inactive mode of the communication apparatus;
a DTX cycle configured for a connected mode of the communication apparatus;
a DRX cycle configured for a connected mode of the communication apparatus;
an SSB-to-resource occasion mapping period of the common channel configured for the communication apparatus;
an SSB-to-resource occasion mapping cycle of the common channel configured for the communication apparatus;
a common channel association period configured for the communication apparatus; or
a common channel association pattern period configured for the communication apparatus.

12. The communication apparatus according to one of claims 1 to 11, wherein before receiving the first indication, the transceiver, in operation, receives a third indication specifying the configuration of additional candidate resource occasions; and
the obtaining of the configuration of additional candidate resource occasions includes obtaining the configuration of additional candidate resource occasions from the third indication;
optionally, wherein the third indication is included in a system information block, SIB, message;
optionally, wherein the third indication is included in a radio resource control, RRC, message.

13. A base station, comprising:
circuitry which, in operation,
determines additional resource occasions for a common channel among a set of candidate resource occasions, with which a communication apparatus is configured,
generates a first indication, indicating to the communication apparatus an availability of the additional resource occasions, and
determines a transmission timing of the first indication, the transmission timing being usable by the communication apparatus to determine a start timing for applying the additional resource occasions; and
a transceiver which, in operation, transmits the first indication to the communication apparatus at the transmission timing.

14. The base station according to claim 13, wherein the circuitry, in operation, starts to apply the additional resource occasions depending on the transmission timing of the first indication.

15. A method comprising the following steps performed by a communication apparatus:
receiving a first indication indicating an availability of additional resource occasions for a common channel;
obtaining a set of candidate resource occasions for the common channel from a configuration of the additional resource occasions;
determining a start timing for applying the additional resource occasions among the set of candidate resource occasions, based on a reception timing of the first indication; and
starting to apply the additional resource occasions from the determined start timing.
